# EUROPEAN PATENT APPLICATION

(11) **EP 4 755 560 A1**
(43) Date of publication of application: **10.06.2026**
(21) Application number: 26150371.8
(22) Date of filing: 28.11.2018
(51) Int. Cl.: B23K 3/02, B23K 3/04, B23K 3/08, F23D 14/54, G05D 11/13

(54) **APPARATUS AND METHOD FOR BRAZING**

(30) Priority: 29.11.2017 US 201762592016 P; 27.06.2018 US 201816019655
(62) Divisional of application: 18208918.5
(71) Applicant: Lincoln Global, Inc., Santa Fe Springs, CA 90670 (US)
(72) Inventor: EDENFIELD, Randy C., Lula, 30554 (US); PERRY, Douglas S., Flowery Branch, 30542 (US); KLEIN, Andrew, Lebanon, 45036 (US); TEFFT, Robert, Cincinnati, 40208 (US); SMITH, Richard Kyle, Liberty Township, 45044 (US)
(74) Representative: Grosse Schumacher Knauer von Hirschhausen

(57) **Abstract**

Embodiments of brazing systems are disclosed. In one embodiment, a brazing system (100) includes a controller circuit board (controller) (260) having a processor (264) and a memory (262). The system also includes a fuel gas input (222), a fuel gas output (224), an oxygen/air gas input (216), and an oxygen/air gas output (218). The system further includes a touch screen display (202) and a foot pedal (610), each operatively connected to the controller (260). The controller (260) is configured to store multiple jobs of flame presets in the memory (262). Any job can be called up from the controller (260) and the flame presets can be cycled through in response to tapping the foot pedal (610). Each job corresponds to a sequence of joint brazings to be performed on a braze assembly and includes a plurality of selectable flame presets. Each flame preset defines a flame setting based on a flow rate of a fuel gas and a flow rate of an oxygen/air gas.

## Description

### CROSS REFERENCE TO RELATED APPLICATIONS/INCORPORATION BY REFERENCE

This U.S. Patent Application claims priority to and the benefit of U.S. Provisional Patent Application Serial No. 62/592,016, filed on November 29, 2017, the disclosure of which is incorporated herein by reference in its entirety. U.S. Patent No. 8,444,041, which was issued on May 21, 2013 based on an application filed on April 8, 2011, is incorporated herein by reference in its entirety.

### TECHNICAL FIELD

The invention relates to a brazing system according to the preamble of claim 1, and embodiments of the present invention described herein relate generally to brazing systems with reproducible gas flow rate control using a plurality of gases and methods for achieving the same.

### BACKGROUND OF THE DISCLOSURE

Brazing is one of the known methods of joining metal members together with a brazing filler, i.e., a metal or alloy having a lower melting point than the metals to be joined. Brazing typically involves the use of a torch having at least two needle metering valves that control the flow and ratio of at least two welding gases. One of the gases will include a flammable fuel gas such as LP gas, natural gas, acetylene gas, methane, propane, butane, hydrogen and mixtures and combinations thereof, while the other gas will include a combustion-assisting gas such as oxygen or air. Needle metering valves are used to manually adjust the flow of the gases before and during brazing because the pressure, flow rate, and/or quality of the gases can vary and, in some cases, lead to quality issues. Adjustment is needed due for a variety of reasons, including changes in external temperature, the total amount of gas used, or the amount of gas remaining in a cylinder, all variables which affect gas flow rates. In addition, a torch operator, even an operator with many years of experience, can have a very difficult time setting the needle valves and determining if the gas mixture creates a flame having an acceptable oxygen to fuel ratio.

In view of the foregoing problems and shortcomings of existing brazing systems with torches having a plurality of adjustment valves, the present application describes brazing systems and methods to overcome these shortcomings.

### SUMMARY OF THE DISCLOSURE

Embodiments of brazing systems and methods are disclosed.

In accordance with one embodiment, there is provided a single torch brazing system. The single torch brazing system accommodates brazing with a single brazing torch. The system includes a controller circuit board (controller) having a processor and a memory. The system also includes a fuel gas input, a fuel gas output, and oxygen/air gas input, and an oxygen/air gas output. As used herein, the term "oxygen/air gas" refers to any of oxygen or air and is the non-fuel gas used by the system. The system further includes a touch screen display operatively connected to the controller circuit board, and a foot pedal operatively connected to the controller circuit board. The controller circuit board is configured to store multiple jobs of flame presets in the memory. Any job of the plurality of jobs of flame presets can be called up from the controller circuit board (e.g., via the touch screen display) and cycled through in response to tapping the foot pedal. Each job of the plurality of jobs of flame presets corresponds to a sequence of joint brazings to be performed on a braze assembly and includes multiple selectable flame presets. Each flame preset of the plurality of selectable flame presets defines a flame setting based on at least a flow rate of a fuel gas and a flow rate of an oxygen/air gas. In one embodiment, the system includes a fuel encoder knob and an oxygen/air encoder knob. A flame preset of the plurality of selectable flame presets can be established in the memory of the controller circuit board by entering a setup mode of the controller circuit board via the touch screen display and using the fuel encoder knob and the oxygen/air encoder knob to independently adjust a flow rate of each of the fuel gas and the oxygen/air gas. In one embodiment, the system includes a robot operatively connected to the controller circuit board via an automation interface. The controller circuit board is configured to communicate with a programmable logic controller of the robot holding a brazing torch via the automation interface to control motion of the robot and to synchronize selected flame types to brazing positions of the robot during a brazing operation. In one embodiment, the system includes a mass flow controller operatively connected to the controller circuit board and between the fuel gas input and the fuel gas output. The mass flow controller is configured to monitor and adjust at least the flow rate of the fuel gas under the control of the controller circuit board. In one embodiment, the system includes a mass flow controller operatively connected to the controller circuit board and between the oxygen/air gas input and the oxygen/air gas output. The mass flow controller is configured to monitor and adjust at least the flow rate of the oxygen/air gas under the control of the controller circuit board. In one embodiment, the system includes a fuel gas mass flow controller and an oxygen/air gas mass flow controller configured to monitor and adjust at least the flow rate of the fuel gas and the flow rate of the oxygen/air gas to maintain a desired flame corresponding to a selected flame setting. The system includes a power supply board configured to supply electrical power to at least the controller circuit board. In one embodiment, the system includes a wireless router. The wireless router is operatively connected to an external computer and the controller circuit board is configured to wirelessly communicate with the external computer via the wireless router for at least one of data collection and management of a software license by the external computer. In one embodiment, the wireless router is a Wi-Fi router and the controller circuit board is configured to wirelessly communicate with the external computer via the Wi-Fi router. In one embodiment, the external computer includes a dashboard user interface implemented as a software application running on the external computer as computer-executable instructions. The dashboard user interface is configured to process collected data, collected by the external computer from the controller circuit board, to be viewed and analyzed by a user. The collected data may be related to at least one of an amount of time the brazing system was on during a brazing process, an amount of time that gas was flowing during the brazing process, settings associated with what the brazing system was doing and when during the brazing process, and diagnostic information.

In accordance with one embodiment, there is provided a multiple torch brazing system. The multiple torch brazing system accommodates brazing with multiple brazing torches, simultaneously. The system includes a controller circuit board having a processor and a memory. The system also includes a touch screen display operatively connected to the controller circuit board. The system further includes a single fuel gas input and multiple fuel gas outputs. The system also includes a fuel gas mass flow controller operatively connected to the controller circuit board and between the single fuel gas input and the plurality of fuel gas outputs. The fuel gas mass flow controller is configured to independently monitor and adjust at least flow rates of fuel gas under the control of the controller circuit board. The system further includes a single oxygen/air gas input and multiple oxygen/air gas outputs. The system also includes an oxygen/air gas mass flow controller operatively connected to the controller circuit board and between the single oxygen/air gas input and the plurality of oxygen/air gas outputs. The oxygen/air gas mass flow controller is configured to independently monitor and adjust at least flow rates of oxygen/air gas under the control of the controller circuit board. In one embodiment, the system further includes a fuel encoder knob and an oxygen/air encoder knob. Flame settings can be established in the memory of the controller circuit board for multiple brazing torches by entering a setup mode of the controller circuit board via the touch screen display and using the fuel encoder knob and the oxygen/air encoder knob to independently adjust flow rates of the fuel gas for each of the plurality of fuel gas outputs and flow rates of the oxygen/air gas for each of the plurality of oxygen/air gas outputs. The fuel gas mass flow controller and the oxygen/air gas mass flow controller are configured to independently monitor and adjust at least the flow rates of the fuel gas for each of the plurality of fuel gas outputs and the flow rates of the oxygen/air gas for each of the plurality of oxygen/air gas outputs under the control of the controlling circuit board to simultaneously maintain different desired flames corresponding to different selected flame settings for each of multiple brazing torches. In one embodiment, the system also includes a first RS232 interface configured to operatively connect the controller circuit board to the fuel gas mass flow controller, and a second RS232 interface configured to operatively connect the controller circuit board to the oxygen/air gas mass flow controller. In one embodiment, the plurality of fuel gas outputs is limited to three fuel gas outputs, and the plurality of oxygen/air gas outputs is limited to three oxygen/air gas outputs. In one embodiment, the system further includes a wireless router. The wireless router is operatively connected to an external computer. The controller circuit board is configured to wirelessly communicate with the external computer via the wireless router for at least one of data collection and management of a software license by the external computer. In one embodiment, the wireless router is a Wi-Fi router and the controller circuit board is configured to wirelessly communicate with the external computer via the Wi-Fi router. The external computer includes a dashboard user interface implemented as a software application running on the external computer as computer-executable instructions. The dashboard user interface is configured to process collected data, collected by the external computer from the controller circuit board, to be viewed and analyzed by a user. In one embodiment, the collected data is related to at least one of an amount of time the brazing system was on during a brazing process, an amount of time that gas was flowing during the brazing process, settings associated with what the brazing system was doing and when during the brazing process, and diagnostic information.

These and other aspects will be evident when viewed in light of the drawings, detailed description and appended claims.

### BRIEF DESCRIPTION OF THE DRAWINGS

At least one embodiment of the present invention may take physical form in certain parts and arrangements of parts, which will be described in detail in the specification and illustrated in the accompanying drawings which form a part hereof, and wherein:
FIG. 1 is a side elevational view of a prior art brazing system in which flow control is achieved using metering valves positioned on the torch;
FIG. 2 illustrates a single torch brazing system configuration mounted on a stand, in accordance with one embodiment of the present invention;
FIG. 3 illustrates various elements of the single torch brazing system configuration of FIG. 2 that can be seen and accessed from a front view, an inlet side view, and an outlet side view of the brazing system, in accordance with one embodiment of the present invention;
FIG. 4 illustrates a multiple torch brazing system configuration mounted on a stand, in accordance with one embodiment of the present invention;
FIG. 5 illustrates various elements of the multiple torch brazing system configuration of FIG. 4 that can be seen and accessed from a front view, an inlet side view, and an outlet side view of the brazing system, in accordance with one embodiment of the present invention;
FIG. 6 and FIG. 7 illustrate a single torch system showing various components and interfaces that are internal or external to the single torch configuration of FIG. 2, in accordance with one embodiment of the present invention;
FIG. 8 and FIG. 9 illustrate a multiple torch system showing various components and interfaces that are internal or external to the multiple torch configuration of FIG. 4, in accordance with one embodiment of the present invention;
FIG. 10 illustrates one embodiment of a brazing configuration in wireless communication with a server computer;
FIG. 11 illustrates one embodiment of a brazing configuration in communication with a server computer via an intermediate computer;
FIG. 12 illustrates one embodiment of a user computer in communication with a server computer via a computer network;
FIGS. 13-17 show embodiments of example screen shots provided by a dashboard user interface;
FIGS. 18A, 18B, 19A, 19B, 20-25, 26A and 26B illustrate embodiments of screen shots provided by the multiple torch configuration of FIG. 4 showing process flow control; and
FIGS. 27A, 27B, 28A, 28B, 29, 30A, 30B, 31-34 illustrate embodiments of screen shots provided by the single torch configuration of FIG. 2 showing process flow control.

### DETAILED DESCRIPTION OF THE DRAWINGS

Exemplary embodiments of the invention will now be described below by reference to the attached figures. The described exemplary embodiments are intended to assist in understanding, and are not intended to limit the scope in any way. Like reference numerals refer to like elements throughout.

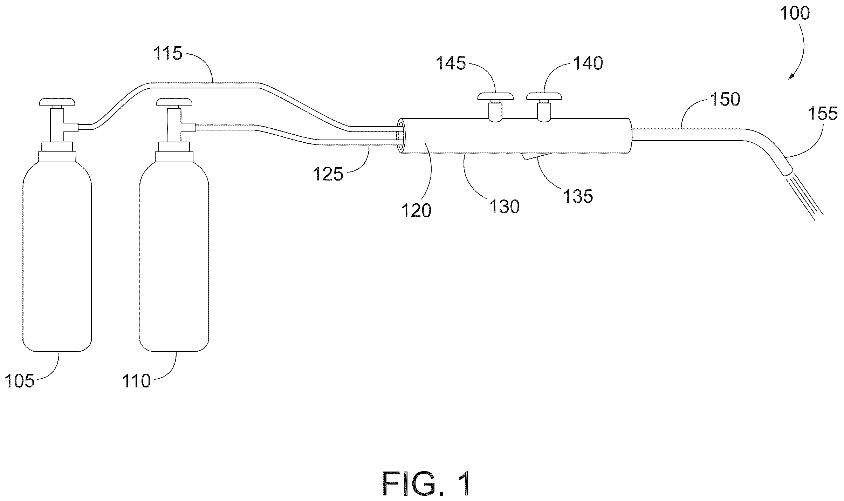

FIG. 1 illustrates a prior art brazing system 100 in which metering valves are positioned on the torch, and includes a first gas source 105 and a second gas source 110, wherein the first gas source 105 provides oxygen or air and the second gas source 110 provides a fuel, including at least one of the following: acetylene, propane, natural gas or methane, propylene, hydrogen, and butane or blends thereof. A first gas hose 115 connects to the first gas source 105 and to the brazing torch 120, and a second gas hose 125 connects to the second gas source 110 and to the brazing torch 120.

In the illustrated embodiment, the brazing torch 120 includes a handle or a torch body 130, an on/off switch 135, a first needle valve 140, a second needle valve 145, a brazing torch neck 150, and a brazing tip 155. To use the conventional brazing system 100, an operator opens valves on the first gas source 105 and the second gas source 110, opens the first needle valve 140 and the second needle valve 145 to form a flammable gas mixture, and ignites the gas mixture exiting the brazing tip 155. It is understood that the gas sources can be from gas tanks that have pressure regulators, or can be from main supply lines that have pressure regulators. After ignition, the brazing torch operator will make adjustments to the first needle valve 140 and the second needle valve 145 to react to real or perceived inconsistencies in the brazing flame. Further, needle valve settings may be changed due to inconsistencies in the brazing joint caused by fluctuations in gas pressure and flow rates and inaccurate gas mixtures. As discussed above, even very experienced torch operators have difficulty setting flames with consistent oxygen to fuel ratios.

For example, operators can have difficulty accurately determining whether or not a brazing flame from the torch is neutral, or has the desired flame temperature or BTU output. Furthermore, operators have great difficulty in creating a consistent and repeatable flame, with the same flame characteristics.

Again, a brazing system may include a first gas source and a second gas source, wherein the first gas source is oxygen or air and the second gas source is a fuel, including at least one of the following: acetylene, propane, natural gas or methane, propylene, hydrogen, and butane or blends thereof. The gas sources can be from gas tanks that have pressure regulators or from main supply lines that have pressure regulators, for example. A first gas hose can connect to the first gas source and to an enclosure of the brazing system. A second gas hose can connect to the second gas source and to the same enclosure. In some exemplary embodiments, the enclosure is made from materials and constructed to meet NEMA 4X specifications.

In one embodiment, gas from the first gas source flows from the enclosure into a first brazing torch gas hose, and gas from the second gas source flows from the enclosure into a second brazing torch gas hose. The first brazing torch gas hose and the second brazing torch gas hose connect to a brazing torch. Again, the brazing torch may include a handle, an operating trigger or on/off switch, a neck, and a brazing tip. The brazing torch also includes an internal portion where the gases mix before exiting the brazing torch at the brazing tip. An operator activates the operating trigger on the brazing torch to light the torch.

Determination and/or control of at least a ratio of flow rates of a first gas and a second gas, also known as the oxygen to fuel ratio, can be made in accordance with one embodiment. Each of the fuel gases, including acetylene, propane, natural gas or methane, propylene, hydrogen, and butane, has a range of oxygen to fuel ratio that produces a consistent brazing flame every time the operator lights the brazing torch. For example, the oxygen to fuel ratio can be set to reproduce a targeted and maximized oxidizing flame, a neutral flame, a carburizing flame, or any flame having characteristics between the above identified flames as known by those of skill in the art.

In order to provide additional context for various aspects of some embodiments of the present invention, the following discussion is intended to provide a brief, general description of a suitable computing environment in which the various aspects of some embodiments of the present invention may be implemented. Those skilled in the art will recognize that various aspects of some embodiments of the invention also may be implemented in combination with other program modules and/or as a combination of hardware and software. Generally, program modules include routines, programs, components, data structures, etc., that perform particular tasks or implement particular data types.

Moreover, those skilled in the art will appreciate that the inventive methods may be practiced with other computer system configurations, including single-processor or multiprocessor computer systems, minicomputers, mainframe computers, as well as personal computers, hand-held computing devices, microprocessor-based or programmable consumer electronics, and the like, each of which may be operatively coupled to one or more associated devices. The illustrated aspects of some embodiments of the invention may also be practiced in distributed computing environments where certain tasks are performed by remote processing devices that are linked through a communications network. In a distributed computing environment, program modules may be located in both local and remote memory storage devices.

A computerized device (e.g., a computerized controller) or a user interface can utilize an exemplary environment for implementing various aspects of some embodiments of the invention including a computer, wherein the computer includes a processing unit, a system memory, and a system bus. The system bus couples system components including, but not limited to, the system memory to the processing unit. The processing unit may be any of various commercially available processors. Dual microprocessors and other multi-processor architectures also can be employed as the processing unit.

The system bus can be any of several types of bus structure including a memory bus or memory controller, a peripheral bus and a local bus using any of a variety of commercially available bus architectures. The system memory can include read only memory (ROM) and random access memory (RAM). A basic input/output system (BIOS), containing the basic routines that help to transfer information between elements within the computer, such as during start-up, is stored in the ROM.

The computerized device or the user interface can further include a hard disk drive, a magnetic disk drive, e.g., to read from or write to a removable disk, and an optical disk drive, e.g., for reading a CD-ROM disk or to read from or write to other optical media. The computerized device or the user interface can include at least some form of computer readable media. Computer readable media can be any available media that can be accessed by the computer. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other magnetic storage devices, or any other medium which can be used to store the desired information and which can be accessed by the user interface.

Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

A number of program modules may be stored in the drives and RAM, including an operating system, one or more application programs, other program modules, and program data. The operating system in the computerized device or the user interface can be any of a number of commercially available operating systems.

In addition, a user may enter commands and information into the computerized device through a keyboard and a pointing device, such as a mouse. Other input devices may include a microphone, an IR remote control, a track ball, a pen input device, a joystick, a game pad, a digitizing tablet, a satellite dish, a scanner, or the like. These and other input devices are often connected to the processing unit through a serial port interface that is coupled to the system bus, but may be connected by other interfaces, such as a parallel port, a game port, a universal serial bus ("USB"), an IR interface, and/or various wireless technologies. A monitor or other type of display device, may also be connected to the system bus via an interface, such as a video adapter. Visual output may also be accomplished through a remote display network protocol such as Remote Desktop Protocol, VNC, X-Window System, etc. In addition to visual output, a computer or computerized device may include other peripheral output devices, such as speakers, printers, etc.

A display can be employed with a user interface to present data that is electronically received from the processing unit. For example, the display can be an LCD, plasma, CRT, etc. monitor that presents data electronically. Alternatively, or in addition, the display can present received data in a hard copy format such as a printer, facsimile, plotter etc. The display can present data in any color and can receive data from the user interface via any wireless or hard wire protocol and/or standard.

A computerized device can operate in a networked environment using logical and/or physical connections to one or more remote computers. The remote computer(s) can be a workstation, a server computer, a router, a personal computer, microprocessor based entertainment appliance, a peer device or other common network node, and typically includes many or all of the elements described relative to the computer. The logical connections depicted include a local area network (LAN) and a wide area network (WAN). Such networking environments are commonplace in offices, enterprise-wide computer networks, intranets and the Internet.

When used in a LAN networking environment, a computerized device is connected to the local network through a network interface or adapter. When used in a WAN networking environment, a computerized device typically includes a modem, or is connected to a communications server on the LAN, or has other means for establishing communications over the WAN, such as the Internet. In a networked environment, program modules depicted relative to the computerized device, or portions thereof, may be stored in the remote memory storage device. It will be appreciated that network connections described herein are exemplary and other means of establishing a communications link between computers may be used.

Embodiments of some substantially automated brazing systems are described next herein. The indication of flame type (neutral, oxidizing or carburizing) is a function of the oxygen to fuel gas ratio, determined by, for example, a controller of a brazing system, in accordance with one embodiment of the present invention. However, the controller can also take into account the type of fuel being utilized. That is, the ratios that produce certain flames types for a first type of fuel will not be the same for a different type of fuel. Stated differently, a first gas ratio will produce a neutral flame when using acetylene, but the same ratio may not produce a neutral flame when using other types of fuel gas, such as propane, etc. Therefore, the controller takes into account the type of fuel and the gas ratio when determining the flame type. Similarly, the ranges of gas ratios which produce neutral, oxidizing or carburizing flame types will be different for each type of fuel gas used, and thus the controller takes these factors into account when determining the appropriate flame type (e.g., to display the flame type).

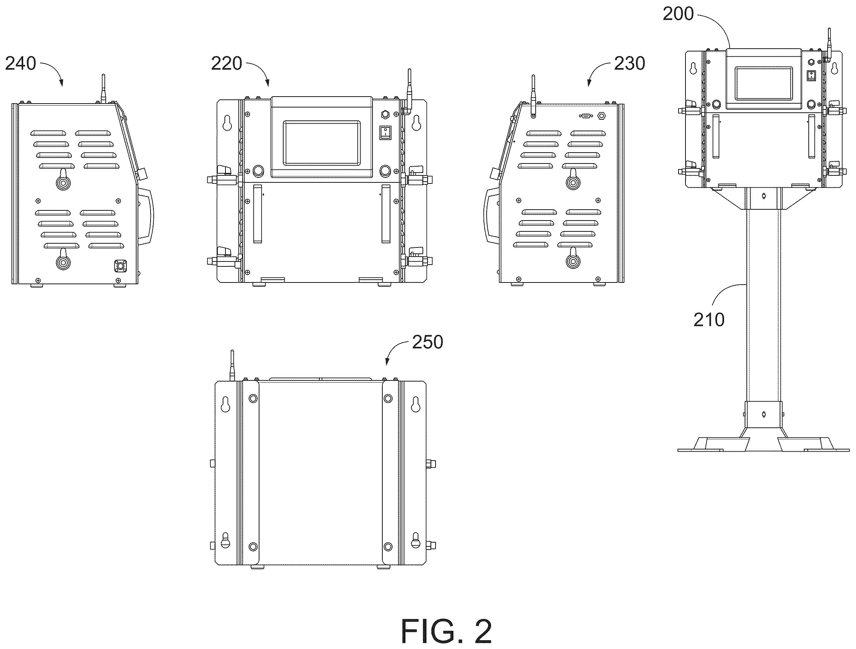

A first embodiment of a substantially automated brazing system is a single torch brazing system configuration that includes a unit that supports operation of a single torch. The single torch configuration has a single oxygen/air gas input, a single oxygen/air gas output, a single fuel gas input, and a single fuel gas output. The fuel gas may be, for example, propane, natural gas, or hydrogen. FIG. 2 shows a single torch unit configuration 200 mounted on a stand 210. Various views of the single torch configuration 200 are shown in FIG. 2 which includes a front view 220, an inlet side view 230, an outlet side view 240, and a rear view 250.

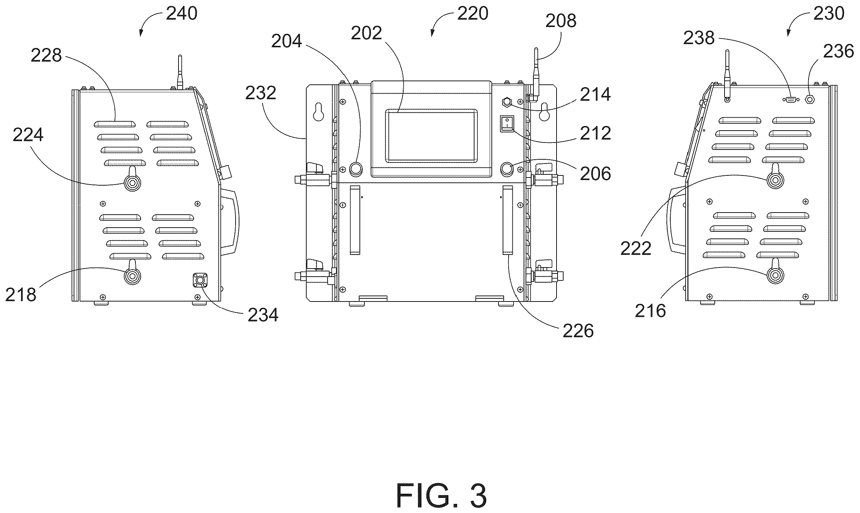

FIG. 3 shows various elements of the single torch configuration 200 that can be seen and accessed from the front view 220, the inlet side view 230, and the outlet side view 240. The elements include a display touch screen 202, an oxygen/air encoder knob 204, a fuel encoder knob 206, an antenna 208 (e.g., a Wi-Fi antenna), a power switch 212, and a power indication LED 214. The elements also include an inlet oxygen/air line (oxygen/air gas input) 216, an outlet oxygen/air line (oxygen/air gas output) 218, an inlet fuel line (fuel gas input) 222, and an outlet fuel line (fuel gas output) 224. The elements further include handles 226, side louvers 228, and wall mount brackets 232. The elements also include a foot pedal connector 234, an AC supply input 236, and an automation interface 238.

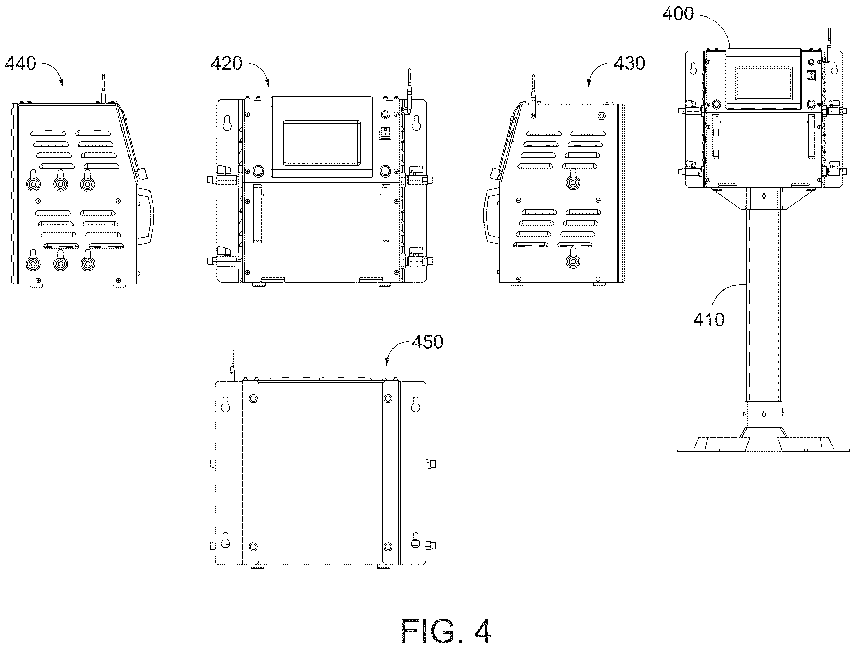

A second embodiment of a substantially automated brazing system is a multiple torch brazing system configuration that includes a unit that supports operation of multiple torches (e.g., three torches) and provides different tips and different settable flow rates for each torch. The multiple torch configuration has one oxygen/air gas input and one fuel gas input along with multiple (e.g., three) controlled oxygen/air gas outputs and multiple (e.g., three) controlled fuel gas outputs to independently support each of the multiple (e.g., three) torches. The multiple torch configuration allows multiple brazing stations to be supported by a single unit, thus reducing the cost per station. FIG. 4 shows a multiple torch unit configuration 400 mounted on a stand 410. Various views of the multiple torch configuration 400 are shown in FIG. 4 which includes a front view 420, an inlet side view 430, an outlet side view 440, and a rear view 450.

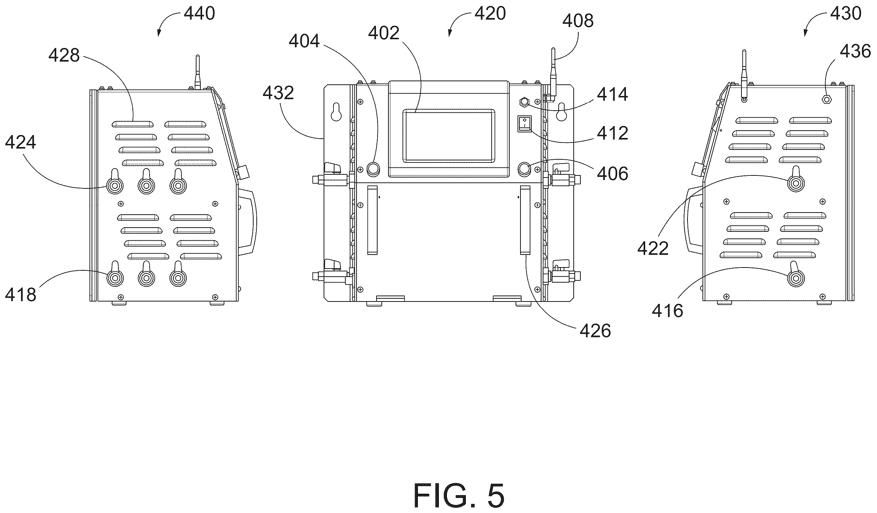

FIG. 5 shows various elements of the multiple torch configuration 400 that can be seen and accessed from the front view 420, the inlet side view 430, and the outlet side view 440. The elements include a display touch screen 402, an oxygen/air encoder knob 404, a fuel encoder knob 406, an antenna 408 (e.g., a Wi-Fi antenna), a power switch 412, and a power indication LED 414. The elements also include an inlet oxygen/air line (oxygen/air gas input) 416, multiple (e.g., three) outlet oxygen/air lines (oxygen/air gas outputs) 418, an inlet fuel line (fuel gas input) 422, and multiple (e.g., three) outlet fuel lines (fuel gas outputs) 424. The elements further include handles 426, side louvers 428, wall mount brackets 432, and an AC supply input 436.

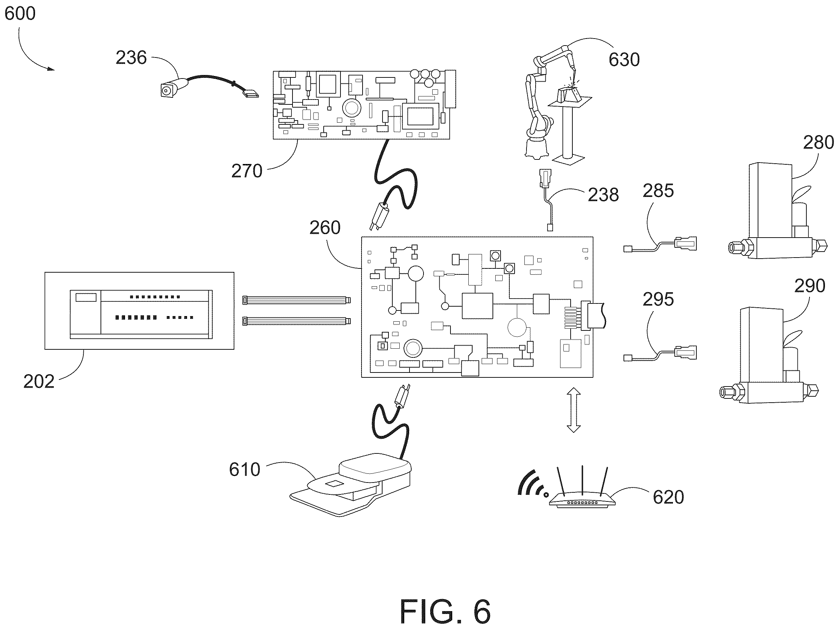

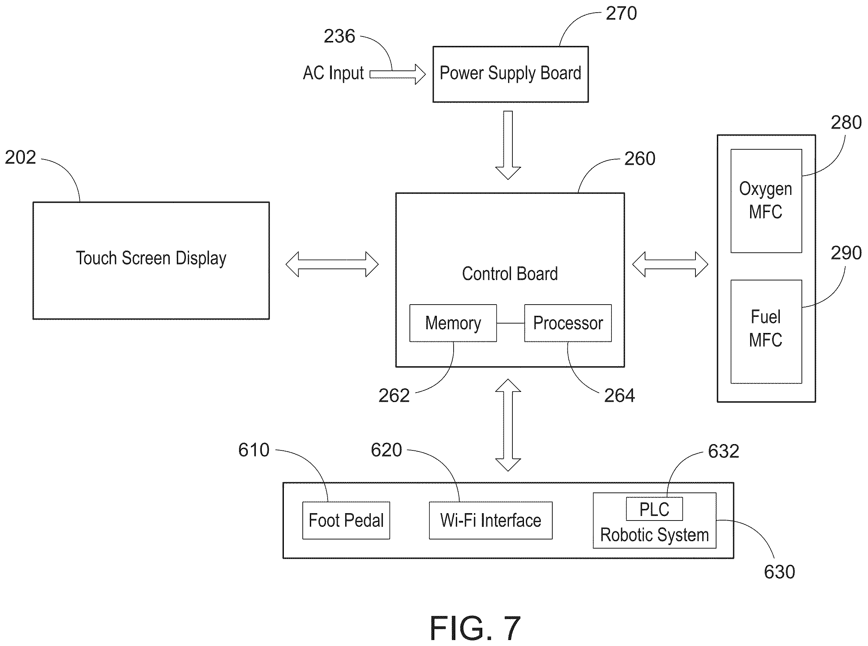

FIG. 6 and FIG. 7 illustrate an embodiment of a single torch system 600 showing various components and interfaces that are internally or externally integrated with the single torch unit configuration 200. As such, the terms such as "single torch configuration 200" and "single torch system 600" may be used subsequently herein, in some instances, to refer to the integrated embodiment. The single torch system 600 includes a controller circuit board (a.k.a., control board or controller) 260 having a memory 262 and a processor 264, a power supply board 270, a touch screen display 202, a foot pedal 610, a wireless router 620 (e.g., a Wi-Fi router), a robot system 630 having a PLC 632, an automation (RS485) interface 238, an oxygen/air (oxygen or air) gas mass flow controller (MFC) 280 with a first RS232 interface 285, and a fuel gas MFC 290 with a second RS232 interface 295. The touch screen display 202 and the foot pedal 610 operatively connect to the controller circuit board 260. The power supply board 270 also operatively connects to at least the controller circuit board 260 to provide electrical power. In one embodiment, the controller circuit board 260 distributes the electrical power to other components such as, for example, the touch screen display 202. In another embodiment, the power supply board 270 operatively connects to the controller circuit board 260 as well as other components such as, for example, the touch screen display 202 to provide electrical power.

The oxygen/air gas MFC 280 is operatively connected to the controller circuit board 260 via the RS232 interface 285 and is also operatively connected between the oxygen/air gas input 216 and the oxygen/air gas output 218. The oxygen/air gas MFC 280 is configured to monitor and adjust at least the flow rate of the oxygen/air gas under the control of the controller circuit board 260. Similarly, the fuel gas MFC 290 is operatively connected to the controller circuit board 260 via the RS232 interface 295 and is also operatively connected between the fuel gas input 222 and the fuel gas output 224. The fuel gas MFC 290 is configured to monitor and adjust at least the flow rate of the fuel gas under the control of the controller circuit board 260.

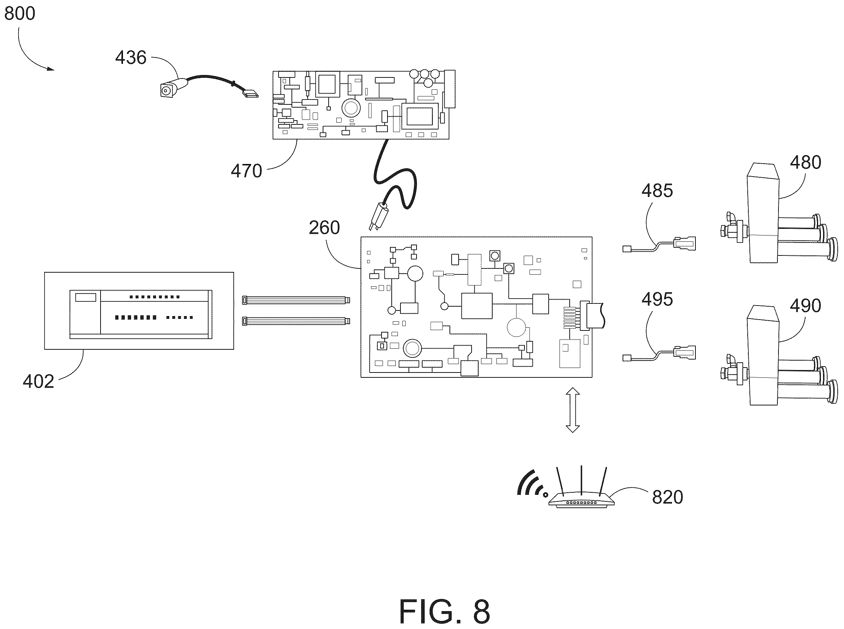

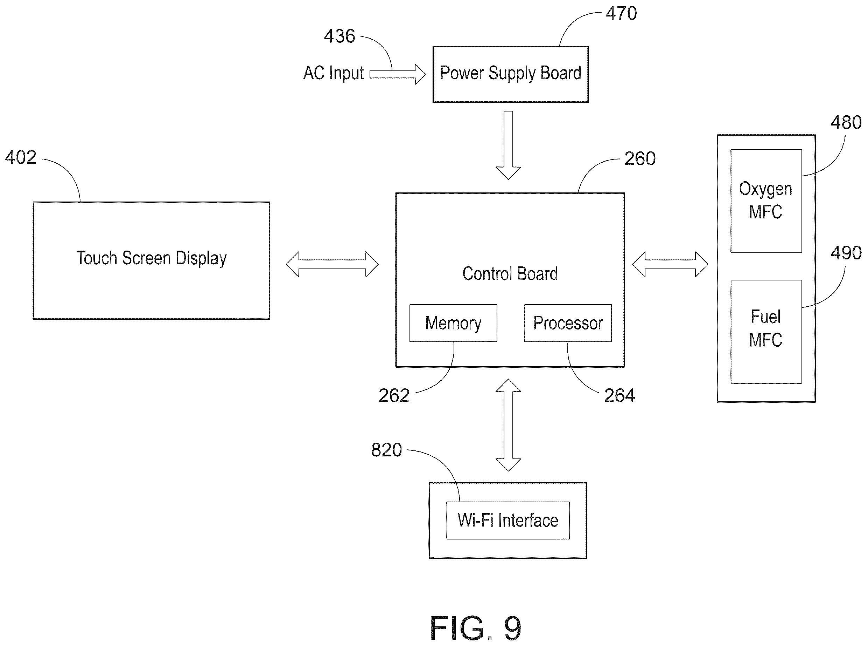

FIG. 8 and FIG. 9 illustrate an embodiment of a multiple torch system 800 showing various components and interfaces that are internally or externally integrated with the multiple torch unit configuration 400. As such, terms such as "multiple torch configuration 400" and "multiple torch system 800" may be used subsequently herein, in some instances, to refer to the integrated embodiment. In accordance with some embodiments, both the single torch configuration 200 and the multiple torch configuration 400 use a common controller circuit board 260 that can be set to support the single torch configuration 200 or the multiple torch configuration 400. In this manner, having a common controller circuit board between the two configurations can provide economic advantages, by allowing the production volume to be increased and the cost to be reduced on components of the common controller circuit board.

The multiple torch system 800 includes a controller circuit board (a.k.a., control board or controller) 260, a power supply board 470, a touch screen display 402, a wireless router 820 (e.g., a Wi-Fi router), an oxygen/air (oxygen or air) gas mass flow controller (MFC) 480 with a first RS232 interface 485, and a fuel gas MFC 490 with a second RS232 interface 495. The MFC's 480 and 490 are each configured to accommodate multiple (e.g., three) controlled output flows of gas. The touch screen display 402 operatively connects to the controller circuit board 260. The power supply board 470 also operatively connects to at least the controller circuit board 260 to provide electrical power. In one embodiment, the controller circuit board 260 distributes the electrical power to other components such as, for example, the touch screen display 402. In another embodiment, the power supply board 470 operatively connects to the controller circuit board 260 as well as other components such as, for example, the touch screen display 402 to provide electrical power.

The oxygen/air gas MFC 480 is operatively connected to the controller circuit board 260 via the RS232 interface 485 and is also operatively connected between the oxygen/air gas input 416 and the multiple oxygen/air gas outputs 418. The oxygen/air gas MFC 480 is configured to independently monitor and adjust at least the flow rates of the oxygen/air gas under the control of the controller circuit board 260 to independently support multiple brazing torches. Similarly, the fuel gas MFC 490 is operatively connected to the controller circuit board 260 via the RS232 interface 495 and is also operatively connected between the fuel gas input 422 and the multiple fuel gas outputs 424. The fuel gas MFC 490 is configured to independently monitor and adjust at least the flow rates of the fuel gas under the control of the controller circuit board 260 to support the multiple brazing torches.

The single torch configuration 200 provides multiple (e.g., five) flame presets that can be changed and cycled through via the foot pedal 610, in accordance with one embodiment. In one embodiment, the controller circuit board 260 stores multiple jobs of flame presets in a memory. Any job of flame presets can be called up from the controller circuit board 260 (e.g., via the touch screen display 202) and cycled through in response to tapping the foot pedal 610. Each job of the multiple jobs corresponds to a sequence of joint brazings to be performed on a braze assembly and includes multiple selectable flame presets. Each flame preset defines a flame setting based on a flow rate of a fuel gas and a flow rate of an oxygen/air gas. A flame preset can be established in a memory of the controller circuit board 260 for a job by entering a setup mode of the controller circuit board 260 via the touch screen display 202. The encoder knobs 204/206 on the front 220 of the unit 200 are used to independently adjust the flow rate for both of the oxygen/air gas and the fuel gas for the preset to establish a type of flame such as, for example, a neutral flame, an oxidizing flame, or a carburizing flame. The flame preset can be named and saved in a memory 262 (see FIG. 7) of the system 200. In accordance with one embodiment, up to 100 flame presets can be established, and groups or jobs of five presets can be formed from the 100 flame presets such that any job of presets can be called up and cycled through by tapping the foot pedal 610. In this manner, a sequence of joint brazings to be performed on a braze assembly, that may each require a different flame setting, can be readily and easily accommodated.

In accordance with another embodiment, the multiple torch configuration 400 provides similar presets and jobs that may be set up and used by each of the multiple torches. For example, flame settings can be established in the memory 262 of the controller circuit board 260 for a plurality of brazing torches by entering a setup mode of the controller circuit board 260 via the touch screen display 402. The fuel encoder knob 406 and the oxygen/air encoder knob 404 can then be used to independently adjust flow rates of the fuel gas for each of the plurality of fuel gas outputs 424 and flow rates of the oxygen/air gas for each of the plurality of oxygen/air gas outputs 418.

In one embodiment, the flow of gas is controlled via mass flow controllers (e.g., 280 and 290 in the single torch configuration; 480 and 490 in the multiple torch configuration). The MFC's 480 and 490 are each configured to control three gas output flows. The single torch configuration 200 and the multiple torch configuration 400 each include integrated software having computer-executable instructions stored in memory 262 (see FIG. 7 and FIG. 9) and configured to execute on a processor 264 (see FIG. 7 and FIG. 9) of the common controller circuit board 260. The software automatically monitors sensed gas flow and makes adjustments to the mass flow controllers (e.g., 280 and 290 or 480 and 490), in accordance with one embodiment, to create and maintain the desired (selected) flame(s). The software is configured to react in real time to changes in gas flow.

For example, the fuel gas MFC 290 and the oxygen/air MFC 280 are configured to monitor and adjust at least the flow rate of the fuel gas and the flow rate of the oxygen/air gas, under the control of the controller circuit board 260, to maintain a desired flame corresponding to a selected flame setting. Similarly, the fuel gas MFC 490 and the oxygen/air gas MFC 480 are configured to independently monitor and adjust at least the flow rates of the fuel gas for each of the multiple fuel gas outputs 424 and the flow rates of the oxygen/air gas for each of the multiple oxygen/air gas outputs 418 under the control of the controlling circuit board 260 to simultaneously maintain different desired flames corresponding to different selected flame settings for each of multiple brazing torches.

In accordance with one embodiment, an oxygen/air gas mass flow controller is configured to provide a controlled flow range of 2 to 100 standard cubic feet per hour (SCFH) for oxygen, and 2 to 100 SCFH for air. In accordance with one embodiment, a fuel gas mass flow controller is configured to provide a controlled flow range of 2 to 100 SCFH for methane, 1.2 to 60 SCFH for propane, 2 to 100 SCFH for acetylene, 2 to 100 SCFH for hydrogen, 1.4 to 70 SCFH for propylene, and 1 to 44 SCFH for butane.

In one embodiment (e.g., the single torch configuration), a brazing system includes a RS485 communication port (an automation interface) 238 for remote control of the brazing system by a programmable logic controller (PLC) (e.g., PLC 632 of the robotic system 630). The automation interface 238 is operatively connected to the controller circuit board 260. In this manner, brazing can be performed automatically by the robotic system 630 with the PLC 632 (which controls motion of a robot of the robotic system 630 holding a brazing torch) while also remotely controlling the brazing system (e.g., to call up different preset flame types during a robotic brazing process being performed on a brazing assembly by the robot). The PLC 632 effectively synchronizes the selected flame types to the brazing positions of the robot, in accordance with one embodiment.

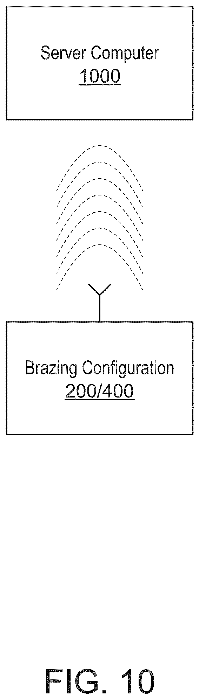

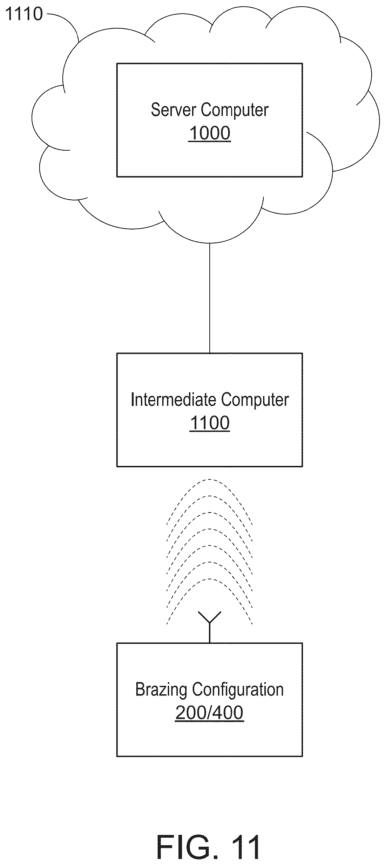

In accordance with one embodiment, both the single torch configuration 200 and the multiple torch configuration 400 support wireless communication capability (e.g., via the Wi-Fi router 620 or 820) and are configured to communicate with an external server computer 1000 for data collection (e.g., for acquiring collected data from the controller circuit board 260) and management of a software license, as shown in FIG. 10. For example, in one embodiment of the single torch configuration 200, the wireless router 620 is operatively connected to the external server computer 1000. The controller circuit board 260, operatively connected to the antenna 208, is configured to wirelessly communicate with the external server computer 1000 via the wireless router 620. In one embodiment of the multiple torch configuration 400, the wireless router 820 is operatively connected to the external server computer 1000. The controller circuit board 260, operatively connected to the antenna 408, is configured to wirelessly communicate with the external server computer 1000 via the wireless router 820. The external server computer 1000 is on-site and within wireless communication range of the brazing system 200/400, in accordance with one embodiment. In accordance with another embodiment, the brazing system 200/400 may communicate wirelessly with an intermediate computer system 1100 (see FIG. 11). The intermediate computer system 1100 may then communicate with the server computer 1000 which is located off-site (e.g., "in the cloud" 1110).

During data collection, a data string is wirelessly sent from the brazing system to the server computer 1000. The data string may be sent at a particular settable time (e.g., when a brazing process is completed or at the end of the work day), in accordance with one embodiment. The data string may be sent continuously during the brazing process, in accordance with another embodiment. The string of data includes data related to, for example, an amount of time the brazing system was on during the brazing process, an amount of time that gas was flowing during the brazing process, settings associated with what the brazing system was doing (and when) during the brazing process, as well as other monitored or diagnostic information. The server computer 1000 can then analyze the brazing process, or the data can be extracted from the server computer 1000 by another system which can then analyze the brazing process, in accordance with various embodiments. In accordance with one embodiment, the data on the server computer 1000 is presented to a user via a web interface where web pages reside on the server computer 1000.

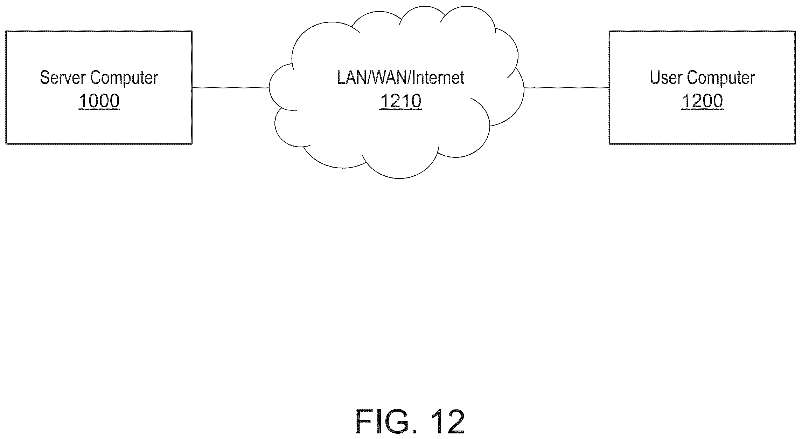

In accordance with one embodiment, the server computer 1000 is configured to be accessed by an external user and provide the collected data (e.g., collected from the controller circuit board 260) to a dashboard user interface that allows the user to view and analyze the collected data on the user's desktop computer 1200, for example (see FIG. 12). The user's computer 1200 may access the server computer 1000 via an intermediate computer network 1210 (e.g., a LAN, a WAN, the internet, or some combination thereof). The dashboard user interface is provided by a software application running on the user's computer 1200, in accordance with one embodiment. In another embodiment, the dashboard user interface is provided by the server computer 1000 and the user simply accesses the dashboard user interface, for example, via a web browser on the user's computer 1200. The dashboard user interface is configured to process the collected data collected from the controller circuit board 260 such that the collected data can be viewed and analyzed by the user.

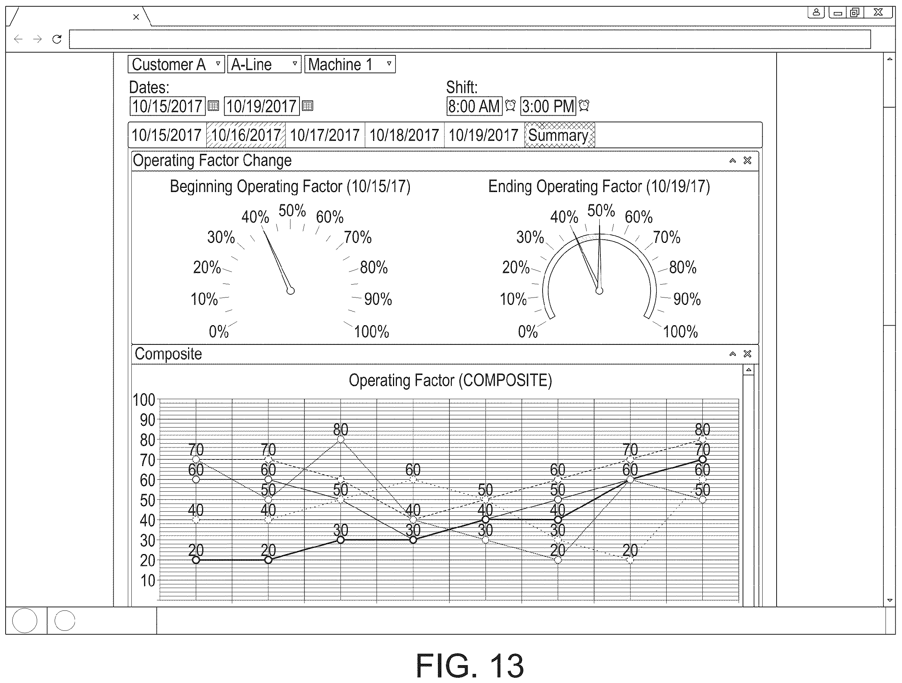

FIGS. 13-17 show embodiments of example screen shots provided by the dashboard user interface. As shown in FIG. 13, a screen shot of the dashboard user interface can be accessed based on a date (see the hi-lighted date in the range of dates). The hi-lighted date is 10-16-17 and the range of dates extends from 10-15-17 to 10-19-17. The screen shot of FIG. 13 shows the "operating factor" for a brazing system, which is the percentage of time the brazing system is on or active. A beginning operating factor (40%) is shown for the beginning date of 10-15-17 and an ending operating factor (50%) is shown for the ending date of 10-19-17, along with a range of operating factors (40% to 50%) over the range of dates. FIG. 13 also shows the composite operating factors, for each of the five dates in the range of dates, hour-by-hour.

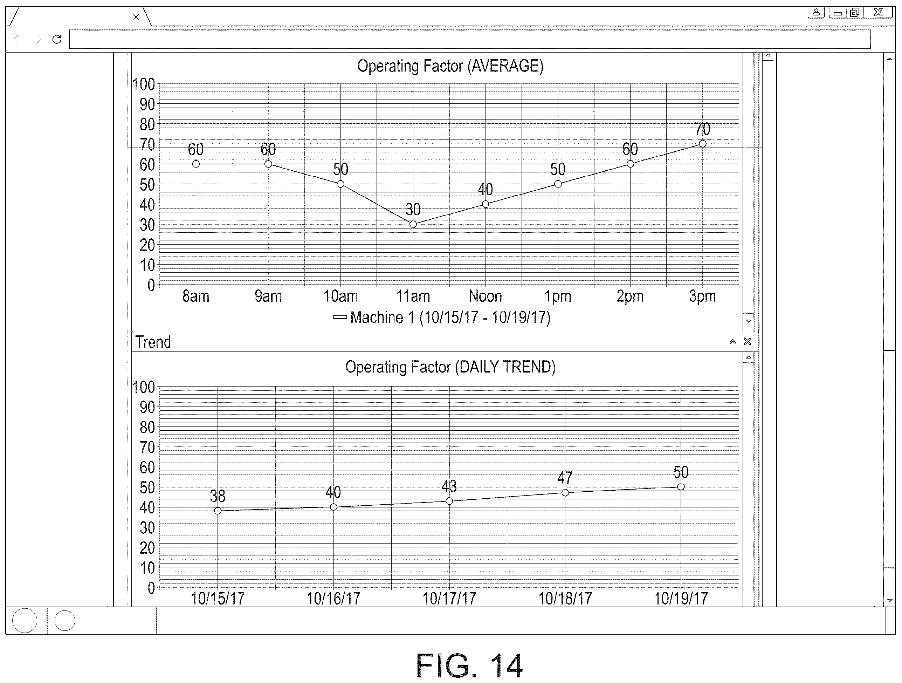

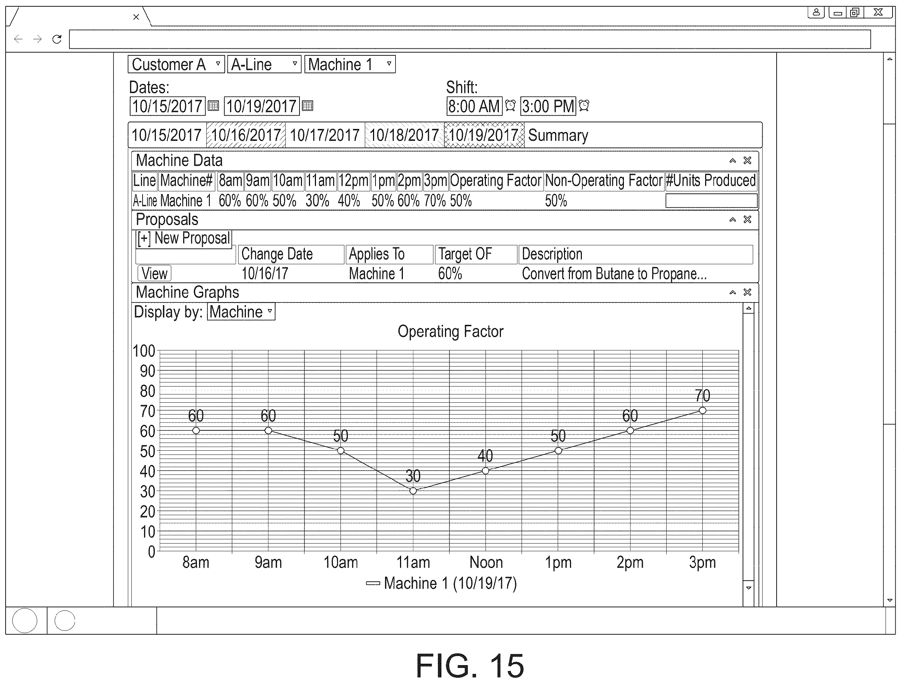

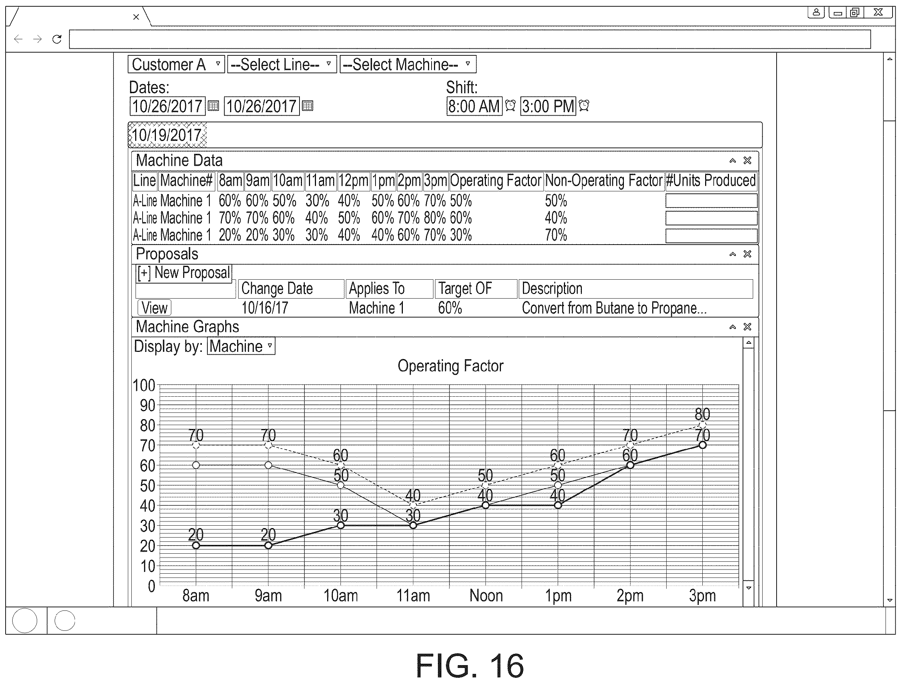

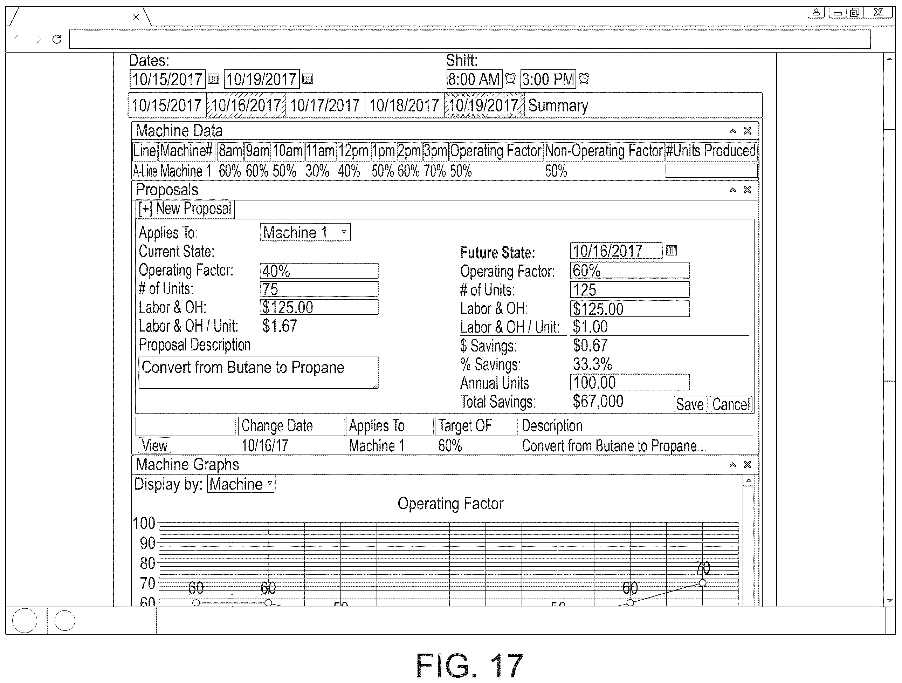

FIG. 14 shows an average operating factor across all five days within the range of days from 8:00 a.m. to 3:00 p.m., along with a daily trend of operating factor across all five days. FIG. 15 shows operating factor, hour-by-hour, for a brazing system for the date of 10-16-17. FIG. 16 shows operating factor, hour-by-hour, for three different brazing systems for the date of 10-19-17. FIG. 17 shows overhead costs, labor costs, and projections of savings for a brazing system. Other types of screen shots provided by the dashboard user interface are possible as well, in accordance with other embodiments.

In one embodiment, a licensed brazing system cannot be operated in a licensed mode by an operator unless a wireless connection (e.g., a Wi-Fi connection) is established with the server computer to establish a validity of the license. The valid license effectively permits the operator to use the brazing system. A license may be good for a period of time and may need to be updated to allow continued use. Otherwise, when the license runs out, the brazing system will revert to a limited operation mode, in accordance with one embodiment, and prevent the operator from using certain features of the brazing system.

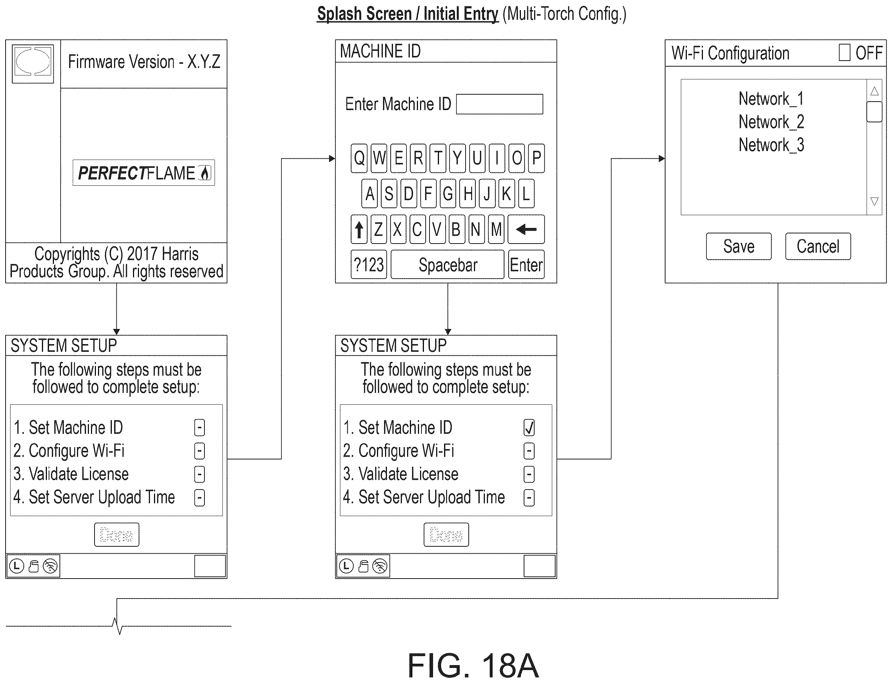

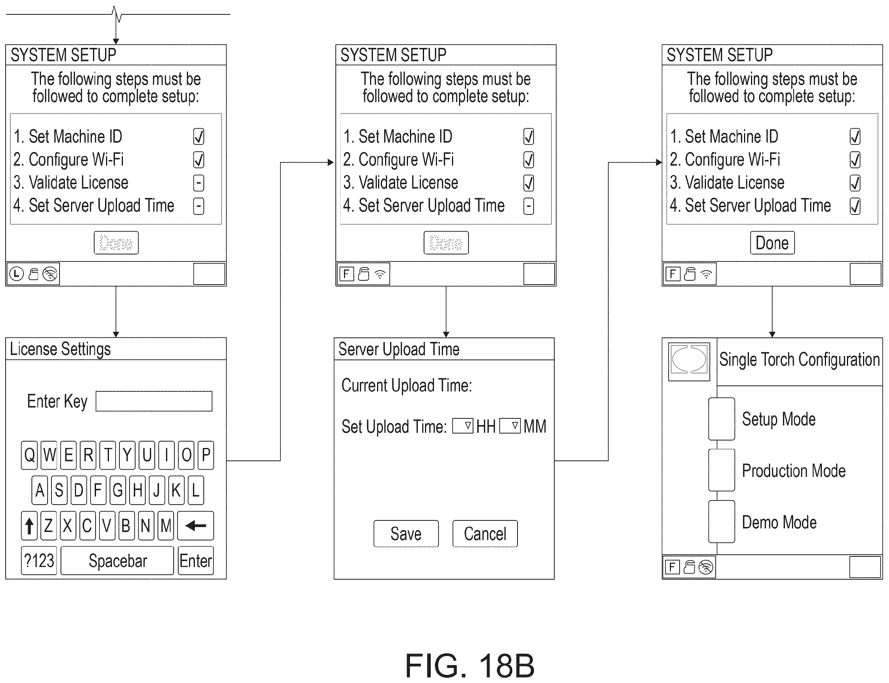

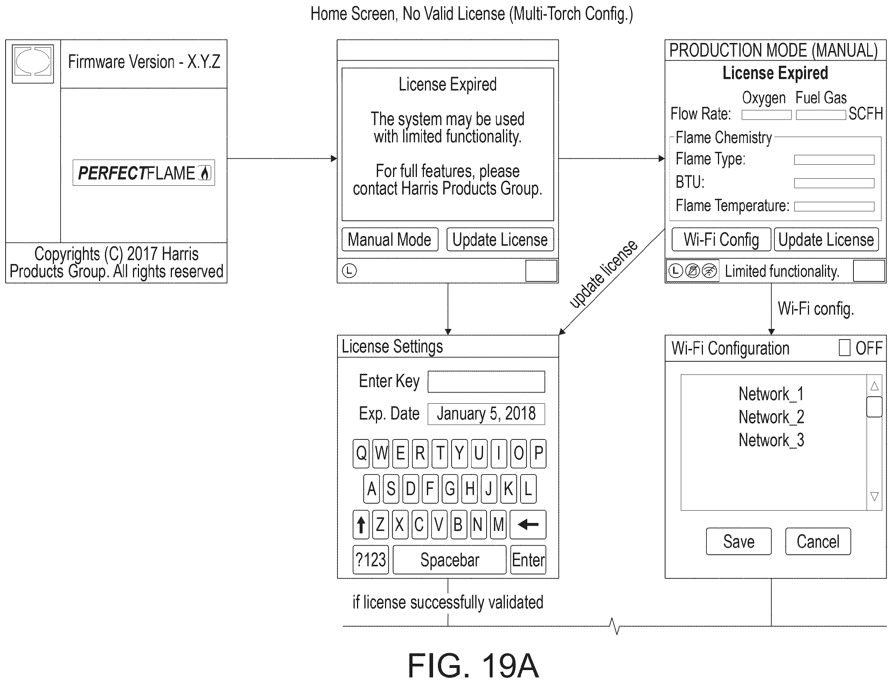

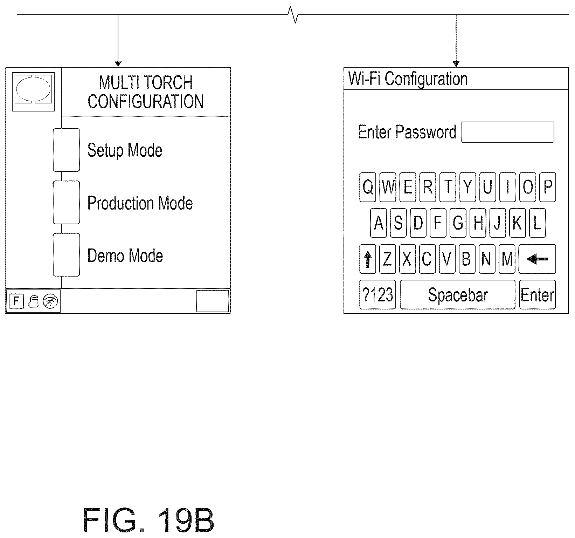

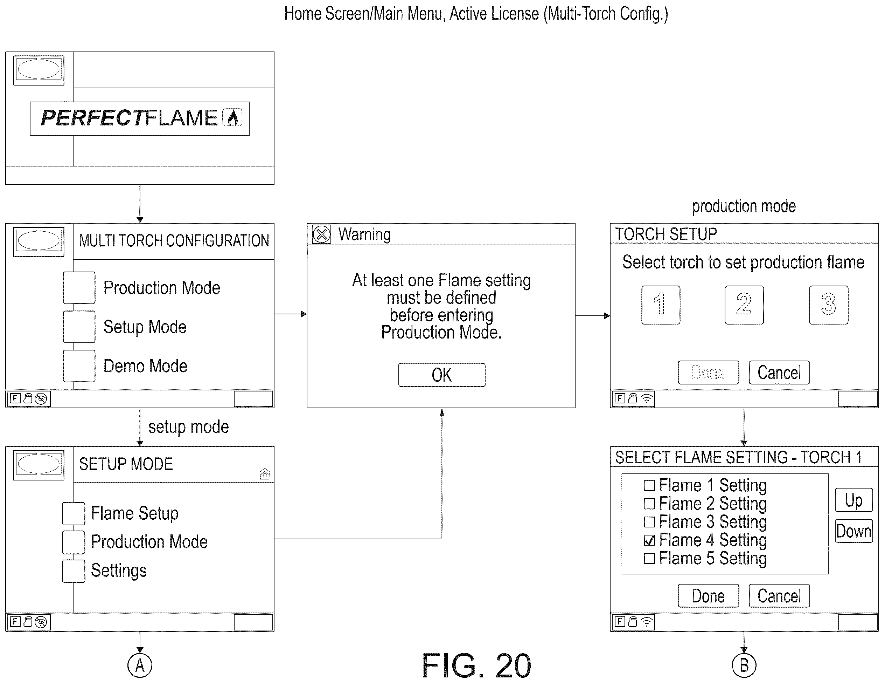

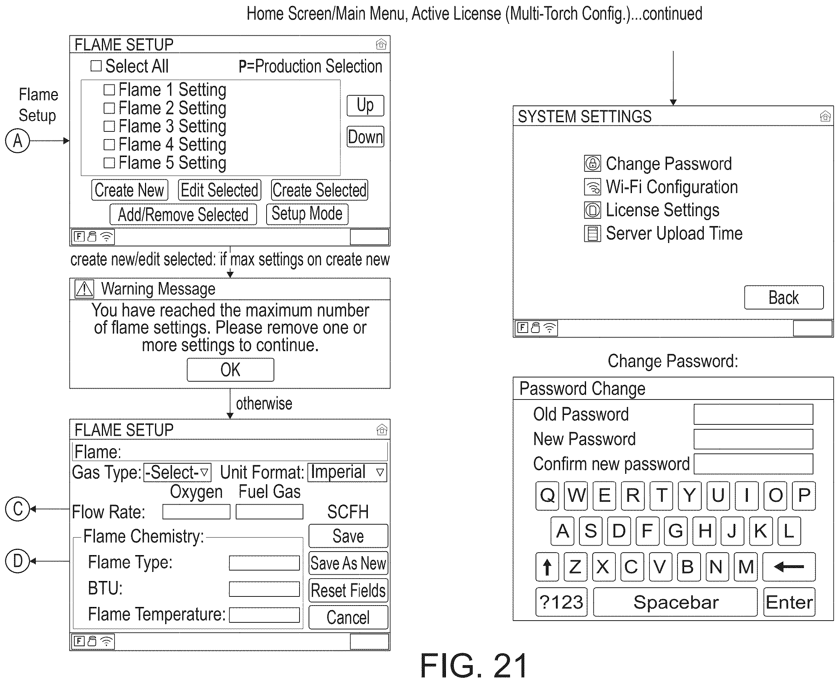

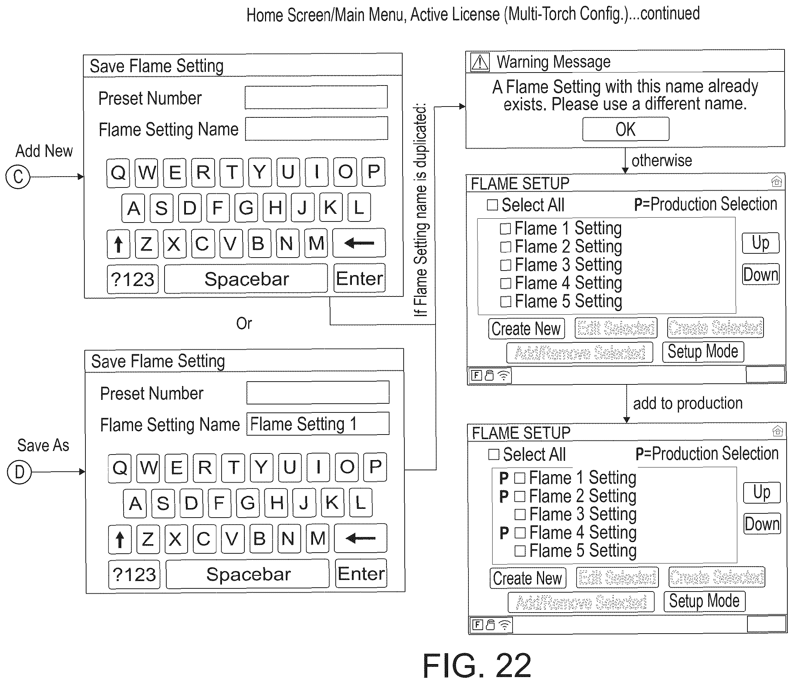

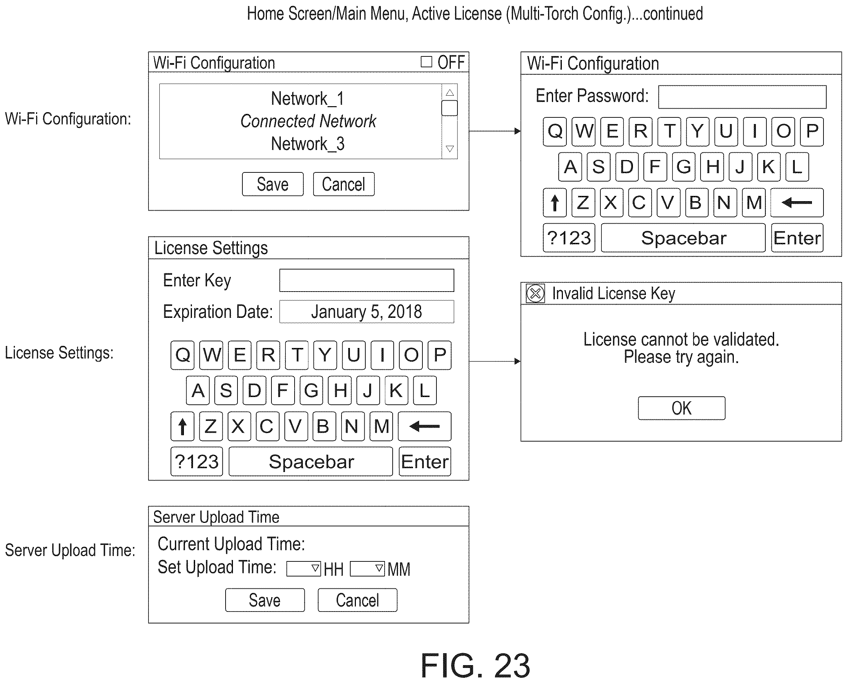

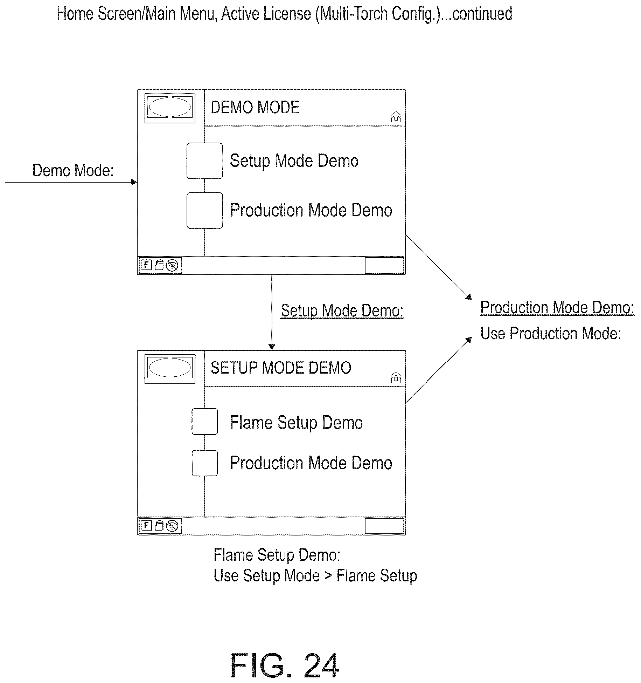

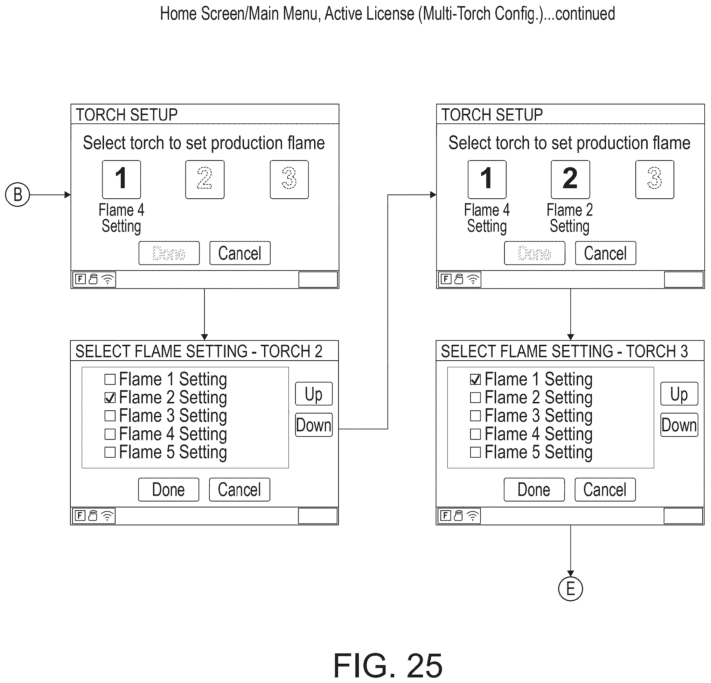

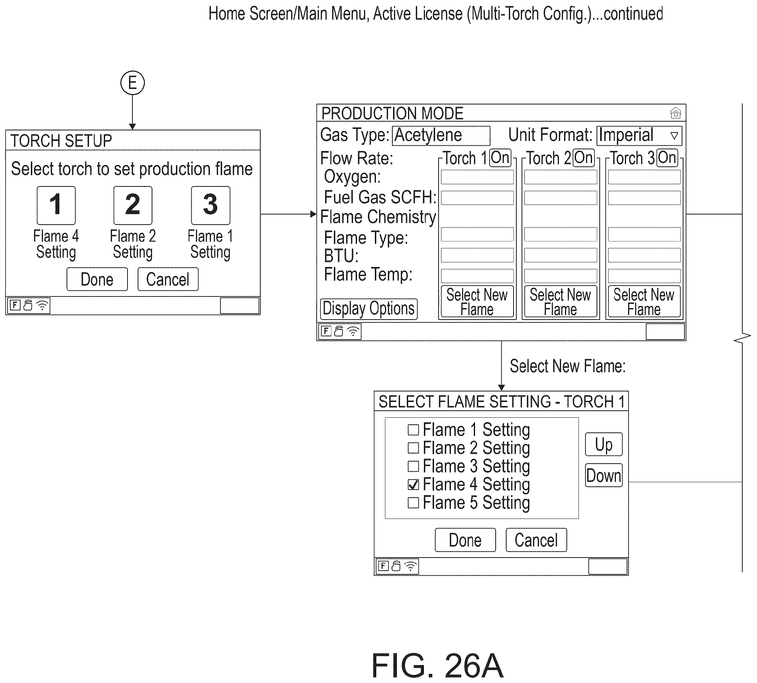

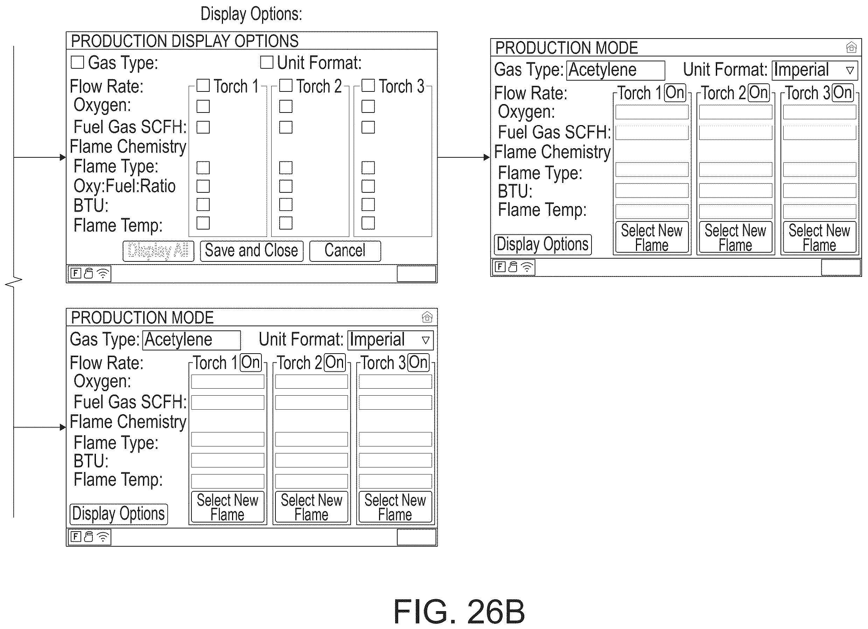

FIGS. 18A-26B illustrate embodiments of screen shots provided by the multiple torch configuration of FIG. 4 showing process flow control. FIG. 18A and FIG. 18B illustrate an embodiment of the process flow concerned with initial entry into the multiple torch configuration. The process flow of FIG. 18A and FIG. 18B includes setting the machine ID, configuring the Wi-Fi, validating the license, and setting the server upload time. FIG. 19A and FIG. 19B illustrate an embodiment of the process flow concerned with there being no valid license for the multiple torch configuration. The process flow of FIG. 19A and FIG. 19B includes updating the license and configuring the Wi-Fi. FIGS. 20-26B illustrate an embodiment of the process flow concerned with the home screen, main menu, and active license for the multi-torch configuration, and includes a production mode, a setup mode, and a demo mode. Various process flow features include flame setup, torch selection, flame setting selection, Wi-Fi configuration, license settings, server upload time, and display options, for example. Other process flow features are possible as well, in accordance with other embodiments.

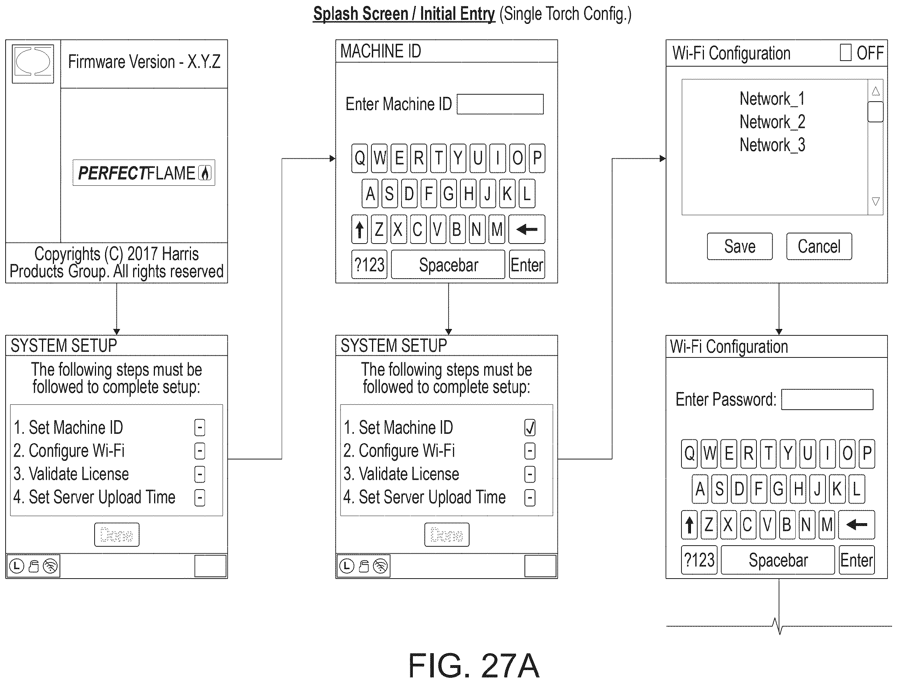

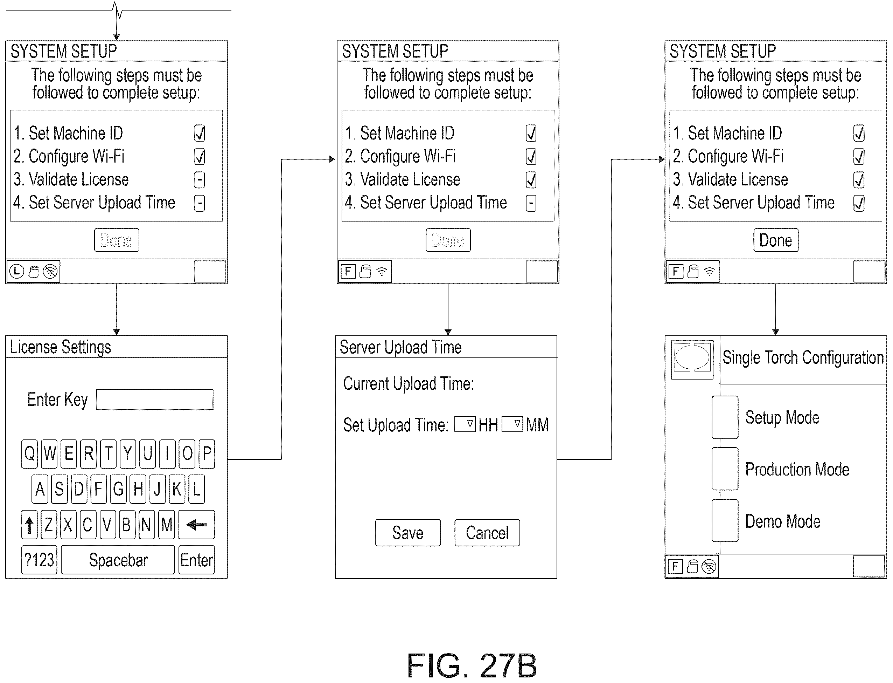

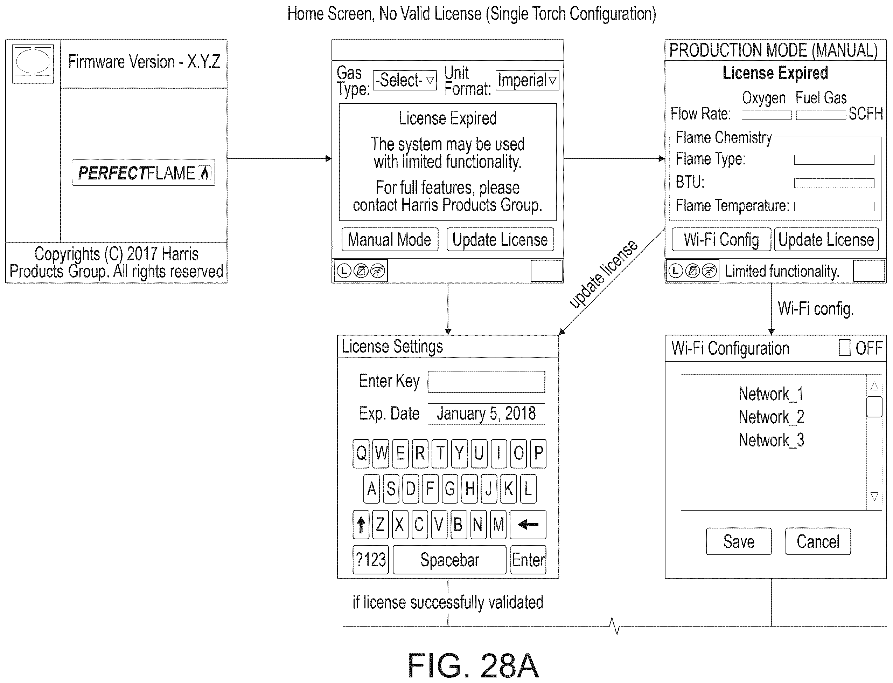

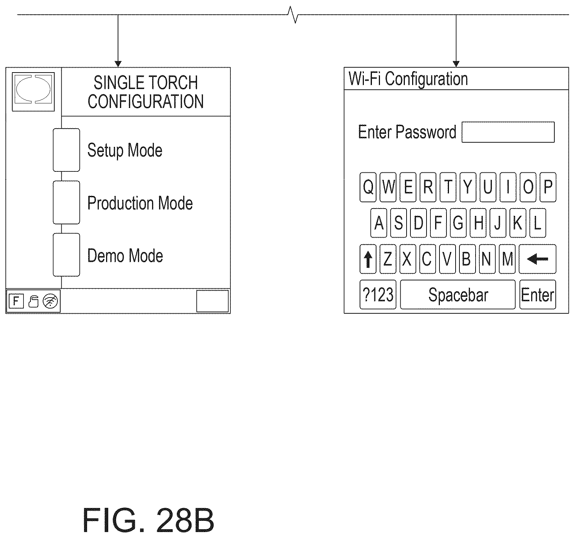

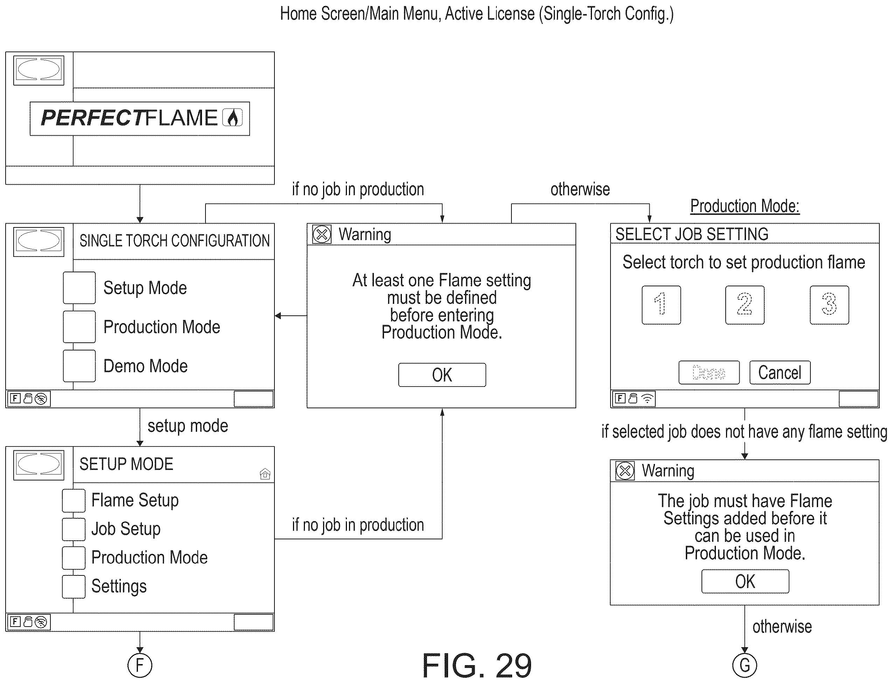

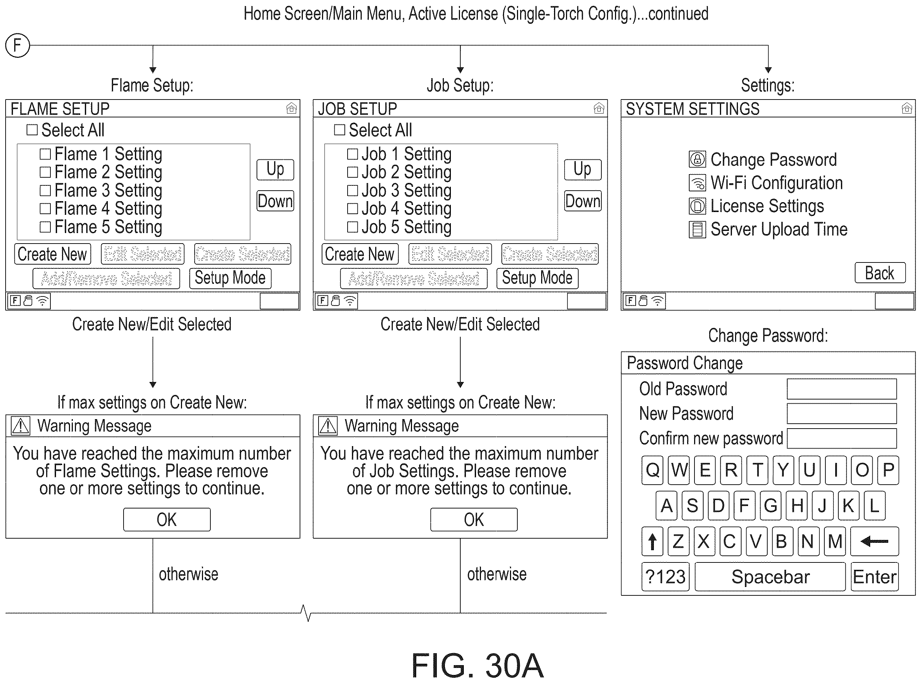

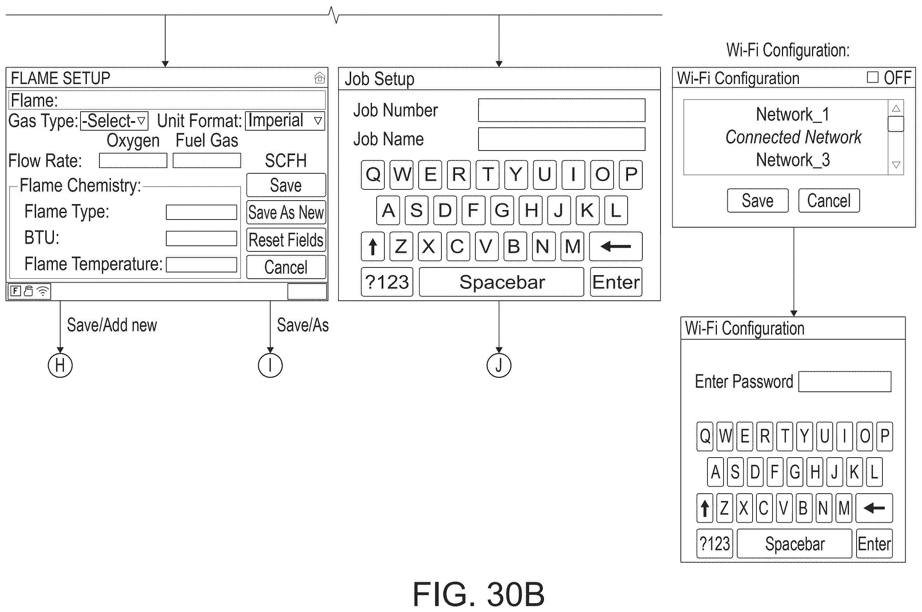

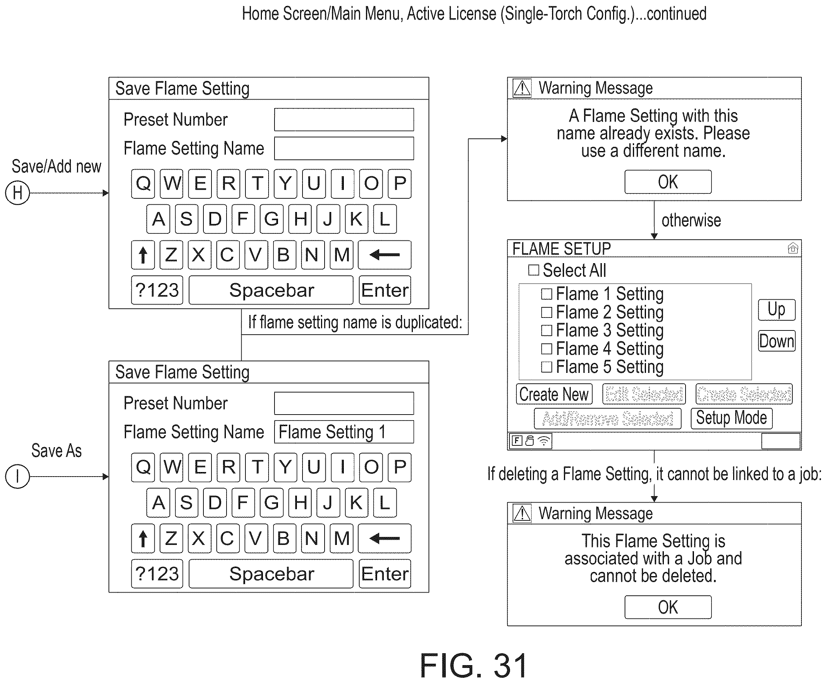

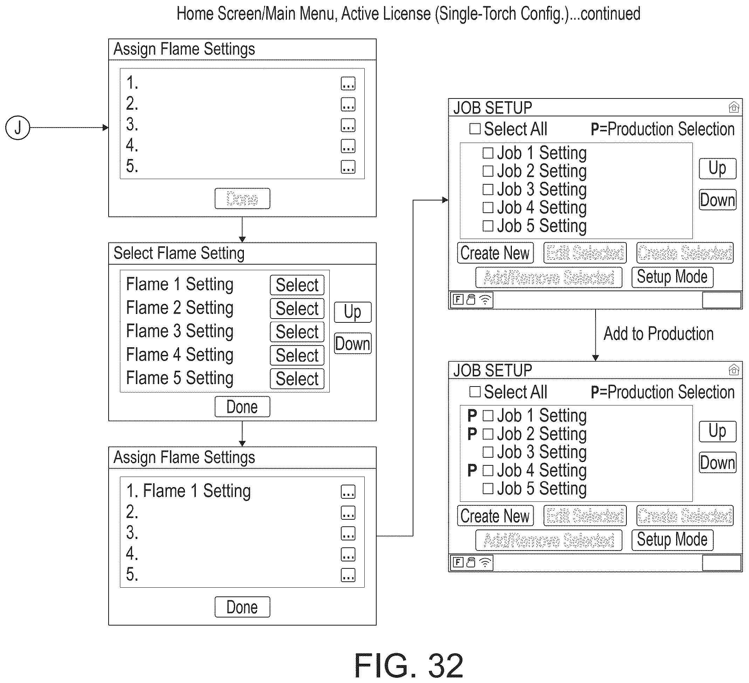

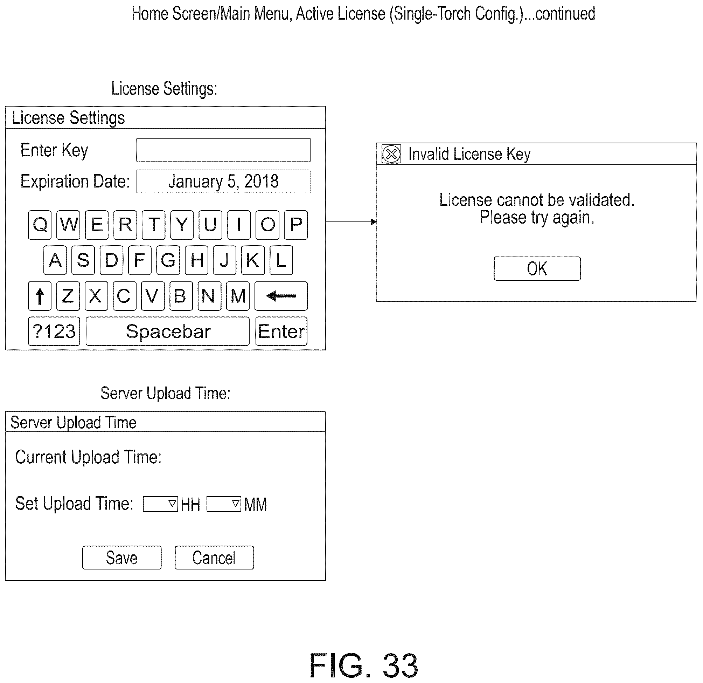

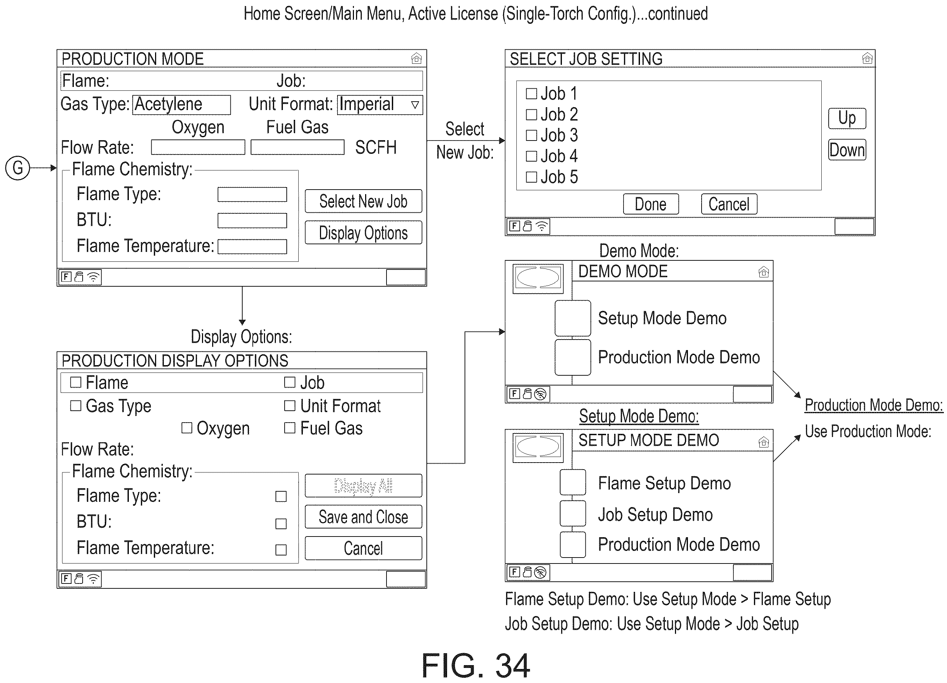

FIGS. 27A-34 illustrate embodiments of screen shots provided by the single torch configuration of FIG. 2 showing process flow control. FIG. 27A and FIG. 27B illustrate an embodiment of the process flow concerned with initial entry into the single torch configuration. The process flow of FIG. 27A and FIG. 27B includes setting the machine ID, configuring the Wi-Fi, validating the license, and setting the server upload time. FIG. 28A and 28B illustrate an embodiment of the process flow concerned with there being no valid license for the single torch configuration. The process flow of FIG. 28A and Fig. 28B includes updating the license and configuring the Wi-Fi. FIGS. 29-34 illustrate an embodiment of the process flow concerned with the home screen, main menu, and active license for the single torch configuration, and include a production mode, a setup mode, and a demo mode. Various process flow features include flame setup, job setup, torch selection, flame setting selection, Wi-Fi configuration, license settings, server upload time, and display options, for example. Other process flow features are possible as well, in accordance with other embodiments.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims, which satisfy the statutory subject matter requirements of 35 U.S.C. §101. The above description of specific embodiments has been given by way of example. From the disclosure given, those skilled in the art will not only understand the general inventive concepts and attendant advantages, but will also find apparent various changes and modifications to the structures and methods disclosed. It is sought, therefore, to cover all such changes and modifications as fall within the spirit and scope of the general inventive concepts, as defined by the appended claims, and equivalents thereof.
Further embodiments are:
1. A single or a multiple torch brazing system (100), the system (100) comprising:
   a controller circuit board (260) having a processor (264) and a memory (262);
   a fuel gas input (222), a fuel gas output (224), an oxygen/air gas input (216), and an oxygen/air gas output (218);
   a touch screen display (202) operatively connected to the controller circuit board;
   characterized by
   a foot pedal (610) operatively connected to the controller circuit board,
   wherein the controller circuit board (260) is configured to store a plurality of jobs of flame presets in the memory,
   wherein any job of the plurality of jobs of flame presets can be called up from the controller circuit board (260) and cycled through in response to tapping the foot pedal (610),
   wherein each job of the plurality of jobs of flame presets corresponds to a sequence of joint brazings to be performed on a braze assembly and includes a plurality of selectable flame presets, and
   wherein each flame preset of the plurality of selectable flame presets defines a flame setting based on at least a flow rate of a fuel gas and a flow rate of an oxygen/air gas.
2. The system of embodiment 1, further comprising a fuel encoder knob (206) and an oxygen/air encoder knob (204), wherein a flame preset of the plurality of selectable flame presets can be established in the memory of the controller circuit board by entering a setup mode of the controller circuit board via the touch screen display and using the fuel encoder knob and the oxygen/air encoder knob to independently adjust a flow rate of each of the fuel gas and the oxygen/air gas.
3. The system of embodiment 1 or 2, further comprising a robot operatively connected to the controller circuit board (260) via an automation interface, wherein the controller circuit board is configured to communicate with a programmable logic controller of the robot holding a brazing torch via the automation interface to control motion of the robot and to synchronize selected flame types to brazing positions of the robot during a brazing operation.
4. The system of one of the embodiments 1 to 3, further comprising a mass flow controller (280) operatively connected to the controller circuit board (260) and between the fuel gas input (222) and the fuel gas output (224), wherein the mass flow controller is configured to monitor and adjust at least the flow rate of the fuel gas under the control of the controller circuit board.
5. The system of one of the embodiments 1 to 4, further comprising a mass flow controller operatively connected to the controller circuit board and between the oxygen/air gas input and the oxygen/air gas output, wherein the mass flow controller is configured to monitor and adjust at least the flow rate of the oxygen/air gas under the control of the controller circuit board.
6. The system of one of the embodiments 1 to 5, further comprising a fuel gas mass flow controller and an oxygen/air gas mass flow controller configured to monitor and adjust at least the flow rate of the fuel gas and the flow rate of the oxygen/air gas to maintain a desired flame corresponding to a selected flame setting.
7. The system of one of the embodiments 1 to 6, further comprising a power supply board configured to supply electrical power to at least the controller circuit board.
8. A multiple torch brazing system, in particular according to one of the preceding embodiments, the system comprising:
   a controller circuit board having a processor and a memory;
   a touch screen display operatively connected to the controller circuit board;
   characterized by
   a single fuel gas input and a plurality of fuel gas outputs;
   a fuel gas mass flow controller operatively connected to the controller circuit board and between the single fuel gas input and the plurality of fuel gas outputs, wherein the fuel gas mass flow controller is configured to independently monitor and adjust at least flow rates of fuel gas under the control of the controller circuit board;
   a single oxygen/air gas input and a plurality of oxygen/air gas outputs; and
   an oxygen/air gas mass flow controller operatively connected to the controller circuit board and between the single oxygen/air gas input and the plurality of oxygen/air gas outputs, wherein the oxygen/air gas mass flow controller is configured to independently monitor and adjust at least flow rates of oxygen/air gas under the control of the controller circuit board.
9. The system of embodiment 8, further comprising a fuel encoder knob and an oxygen/air encoder knob, wherein flame settings can be established in the memory of the controller circuit board for a plurality of brazing torches by entering a setup mode of the controller circuit board via the touch screen display and using the fuel encoder knob and the oxygen/air encoder knob to independently adjust flow rates of the fuel gas for each of the plurality of fuel gas outputs and flow rates of the oxygen/air gas for each of the plurality of oxygen/air gas outputs.
10. The system of embodiment 8 or 9, wherein the fuel gas mass flow controller and the oxygen/air gas mass flow controller are configured to independently monitor and adjust at least the flow rates of the fuel gas for each of the plurality of fuel gas outputs and the flow rates of the oxygen/air gas for each of the plurality of oxygen/air gas outputs under the control of the controlling circuit board to simultaneously maintain different desired flames corresponding to different selected flame settings for each of a plurality of brazing torches.
11. **The** system of one of the embodiments 8 to 10, further comprising:
   a first RS232 interface (285) configured to operatively connect the controller circuit board to the fuel gas mass flow controller; and
   a second RS232 interface (495) configured to operatively connect the controller circuit board to the oxygen/air gas mass flow controller.
12. **The** system of one of the embodiments 8 to 11, wherein the plurality of fuel gas outputs is limited to three fuel gas outputs, and wherein the plurality of oxygen/air gas outputs is limited to three oxygen/air gas outputs.
13. **The** system of one of the embodiments 8 to 12, comprising a foot pedal operatively connected to the circuit board, wherein the controller circuit board (260) is configured to store a plurality of jobs of flame presets in the memory,
   wherein any job of the plurality of jobs of flame presets can be called up from the controller circuit board (260) and cycled through in response to tapping the foot pedal (610),
   wherein each job of the plurality of jobs of flame presets corresponds to a sequence of joint brazings to be performed on a braze assembly and includes a plurality of selectable flame presets, and
   wherein each flame preset of the plurality of selectable flame presets defines a flame setting based on at least a flow rate of a fuel gas and a flow rate of an oxygen/air gas.
14. The system of one of the embodiments 1 to 13, further comprising a wireless router, wherein the wireless router is operatively connected to an external computer, and wherein the controller circuit board is configured to wirelessly communicate with the external computer via the wireless router for at least one of data collection and management of a software license by the external computer; wherein preferably: the wireless router is a Wi-Fi router and the controller circuit board is configured to wirelessly communicate with the external computer via the Wi-Fi router (620).
15. The system of embodiment 14, wherein the external computer includes a dashboard user interface implemented as a software application running on the external computer as computer-executable instructions, wherein the dashboard user interface is configured to process collected data, collected by the external computer from the controller circuit board, to be viewed and analyzed by a user, wherein preferably: the collected data is related to at least one of an amount of time the brazing system was on during a brazing process, an amount of time that gas was flowing during the brazing process, settings associated with what the brazing system was doing and when during the brazing process, and diagnostic information.

**REFERENCE NUMERALS**

| | | | |
|---|---|---|---|
| 100 | brazing system | 250 | rear view |
| 105 | first gas source | 260 | controller circuit board (a.k.a., control board or controller) |
| 110 | second gas source | | |
| 115 | gas hose | 262 | memory |
| 120 | gazing torch | 264 | processor |
| 125 | second gas hose | 270 | power supply board |
| 130 | torch body | 280 | gas mass flow controller (MFC) |
| 135 | on/off switch | 285 | first RS232 interface |
| 140 | first needle valve | 290 | fuel gas MFC |
| 145 | second needle valve | 295 | second RS232 interface |
| 150 | brazing torch neck | 400 | torch unit configuration |
| 155 | brazing tip | 402 | display touch screen |
| 200 | single torch unit configuration | 404 | oxygen/air encoder knob |
| 202 | display touch screen | 406 | fuel encoder knob |
| 204 | oxygen/air encoder knob | 408 | antenna |
| 206 | fuel encoder knob | 410 | stand |
| 208 | antenna | 412 | power switch |
| 210 | stand | 414 | power indication LED |
| 212 | power switch | 416 | inlet oxygen/air line (oxygen/air gas input) |
| 214 | power indication **LED** | | |
| 216 | inlet oxygen/air line (oxygen/air gas input) | 418 | outlet oxygen/air lines (oxygen/air gas outputs) |
| 218 | outlet oxygen/air line (oxygen/air gas output) | 420 | front view |
| | | 422 | inlet fuel line (fuel gas input) |
| 220 | front view | 424 | outlet fuel lines (fuel gas outputs) |
| 222 | inlet fuel line (fuel gas input) | 426 | handle |
| 224 | outlet fuel line (fuel gas output) | 428 | side louver |
| 226 | handle | 430 | inlet side view |
| 228 | side louver | 432 | wall mount bracket |
| 230 | inlet side view | 436 | AC supply input |
| 232 | wall mount brackets | 440 | outlet side view |
| 234 | foot pedal connector | 450 | rear view |
| 236 | AC supply input | 470 | power supply board |
| 238 | automation interface | 480 | gas mass flow controller (MFC) |
| 240 | outlet side view | 485 | first RS232 interface |
| 490 | fuel gas MFC | 800 | multiple torch system |
| 495 | second RS232 interface | 820 | wireless router |
| 600 | single torch system | 1000 | external server computer |
| 610 | foot pedal | 1100 | intermediate computer system |
| 620 | wireless router | 1200 | user's desktop computer |
| 630 | robotic system | 1210 | intermediate computer network |
| 632 | programmable logic controller (PLC) | | |

## Claims

1. A torch brazing system, the system comprising:
a touch screen display; and
a controller circuit board, having a processor and a memory, wherein the controller circuit board is configured to be manually set by an operator to support a single torch configuration or a multiple torch configuration, the single torch configuration including a first integrated software having first computer-executable instructions stored in the memory and configured to execute on the processor, and the multiple torch configuration including a second integrated software having second computer-executable instructions stored in the memory and configured to execute on the processor,
wherein the controller circuit board is operatively connected to the touch screen display and configured to allow user interaction with the controller circuit board via the touch screen display, and
wherein the multiple torch configuration supports the independent setting up of multiple brazing torches and the simultaneous use of the multiple brazing torches by multiple users during multiple independent brazing processes.

2. The torch brazing system of claim 1, wherein the torch brazing system is one of a single torch brazing system or a multiple torch brazing system, and wherein the single torch brazing system and the multiple torch brazing system have at least some controllable hardware elements that are different from each other.

3. The torch brazing system of claim 1 or 2, wherein the controller circuit board is configured to control controllable hardware elements of the single torch brazing system when the controller circuit board is installed in the single torch brazing system and when the controller circuit board is set to the single torch configuration; and/or wherein the controller circuit board is configured to control controllable hardware elements of the multiple torch brazing system when the controller circuit board is installed in the multiple torch brazing system and when the controller circuit board is set to the multiple torch configuration.

4. The torch brazing system of one of the claims 1 to 3, wherein the controller circuit board is configured to provide a home screen and a main menu, and support user interaction, via at least the touch screen display, with a production mode, a setup mode, and a demo mode.

5. The torch brazing system of claim one of the claims 1 to 4, further comprising a robot operatively connected to the controller circuit board via an automation interface, wherein the controller circuit board is configured to communicate with a programmable logic controller of the robot holding a brazing torch via the automation interface to control motion of the robot and to synchronize selected flame types to brazing positions of the robot during a brazing operation.

6. The torch brazing system of one of the claims 1 to 5, further comprising a fuel gas mass flow controller and an oxygen/air gas mass flow controller configured to monitor and adjust at least a flow rate of a fuel gas and a flow rate of an oxygen/air gas to maintain a desired flame corresponding to a selected flame setting; and preferably further comprising a fuel gas mass flow controller and an oxygen/air gas mass flow controller configured to independently monitor and adjust at least flow rates of a fuel gas for each of a plurality of fuel gas outputs of the system and flow rates of an oxygen/air gas for each of a plurality of oxygen/air gas outputs of the system under the control of the controller circuit board in the multiple torch configuration to simultaneously maintain different desired flames corresponding to different selected flame settings for each of the multiple brazing torches.

7. The torch brazing system of one of the claims 1 to 6, wherein the controller circuit board provides a first process flow for the single torch configuration and a second process flow for the multiple torch configuration, wherein the first process flow preferably includes features of at least one of flame set up, job set up, torch selection, flame setting selection, WiFi configuring, activation of a software license, setting a server upload time to upload collected data, and selecting display options, and/or wherein the second process flow preferably includes features of at least one of flame set up, job set up, torch selection, flame setting selection, WiFi configuring, activation of a software license, setting a server upload time to upload collected data, and selecting display options.

8. The torch brazing system of one of the claims 1 to 7, wherein the controller circuit board is configured to control a process flow, where the process flow includes an initial entry into the torch brazing system by a user.

9. The torch brazing system of claim 8, wherein the initial entry into the torch brazing system includes at least one of user setting of a machine identification, user configuration of WiFi, user validation of a software license, and user setting of a server upload time of when to upload collected data collected by the controller circuit board.

10. The torch brazing system of one of the claims 1 to 9, wherein the controller circuit board is configured to store a plurality of jobs of flame presets in the memory,
wherein any job of the plurality of jobs of flame presets can be called up from the controller circuit board,
wherein each job of the plurality of jobs of flame presets corresponds to a sequence of joint brazings to be performed on a braze assembly and includes a plurality of selectable flame presets, and
wherein each flame preset of the plurality of selectable flame presets defines a flame setting based on at least a flow rate of a fuel gas and a flow rate of an oxygen/air gas.

11. The torch brazing system of claim 10, further comprising a fuel encoder knob and an oxygen/air encoder knob, wherein a flame preset of the plurality of selectable flame presets can be established in the memory of the controller circuit board by entering a setup mode of the controller circuit board via the touch screen display and using the fuel encoder knob and the oxygen/air encoder knob to independently adjust a flow rate of each of the fuel gas and the oxygen/air gas.

12. The torch brazing system of one of the claims 1 to 11, further comprising a wireless router and an external computer, wherein the wireless router is operatively connected to the external computer, and wherein the controller circuit board is configured to wirelessly communicate with the external computer via the wireless router for at least one of data collection and management of a software license by the external computer; wherein preferably: the wireless router is a Wi-Fi router and the controller circuit board is configured to wirelessly communicate with the external computer via the Wi-Fi router.

13. The torch brazing system of claim 12, wherein the external computer includes a dashboard user interface implemented as a software application running on the external computer as third computer-executable instructions, wherein the dashboard user interface is configured to process collected data, collected by the external computer from the controller circuit board, to be viewed and analyzed by a user.

14. The torch brazing system of claim 12, wherein the collected data is related to at least one of an amount of time the torch brazing system was on during a brazing process, an amount of time that gas was flowing during the brazing process, settings associated with what the torch brazing system was doing and when during the brazing process, and diagnostic information.

15. The torch brazing system of claim 12, wherein the dashboard user interface is configured to be accessed based on a date to show an operating factor for the torch brazing system, where the operating factor is the percentage of time the brazing system is on or active.
